(19) Europäisches Patentamt
European Patent Office
Office européen des brevets

(11) **EP 4 345 692 A1**

(12) **EUROPEAN PATENT APPLICATION**

(43) Date of publication:
**03.04.2024   Bulletin 2024/14**

(21) Application number: **23200824.3**

(22) Date of filing: **29.09.2023**

(51) International Patent Classification (IPC):
***G06N 3/063*** (2023.01)    ***G06N 3/0464*** (2023.01)
***G06N 3/0495*** (2023.01)

(52) Cooperative Patent Classification (CPC):
**G06N 3/063; G06N 3/0464; G06N 3/0495**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022   GB 202214407**

(71) Applicant: **Imagination Technologies Limited**
**Kings Langley, Hertfordshire WD4 8LZ (GB)**

(72) Inventors:
• **Imber, James**
**Kings Langley, WD4 8LZ (GB)**
• **Cséfalvay, Szabolcs**
**Kings Langley, WD4 8LZ (GB)**
• **Choudhury, Biswarup**
**Kings Langley, WD4 8LZ (GB)**
• **Dikici, Cagatay**
**Kings Langley, WD4 8LZ (GB)**
• **Atherton, Tim**
**Kings Langley, WD4 8LZ (GB)**

(74) Representative: **Slingsby Partners LLP**
**1 Kingsway**
**London WC2B 6AN (GB)**

(54) **METHODS AND SYSTEMS FOR ONLINE SELECTION OF NUMBER FORMATS FOR NETWORK PARAMETERS OF A NEURAL NETWORK**

(57)    Methods and neural network accelerator for online selection of number formats for network parameters of a neural network. The neural network accelerator comprises: at least one network processing hardware unit configured to receive network parameters for layers of the neural network and perform one or more neural network operations on the received network parameters in accordance with the neural network; a statistics collection hardware unit configured to collect one or more statistics on a first set of network parameters for a layer while the neural network accelerator is performing a pass of the neural network; and a format conversion hardware unit configured to convert a second set of network parameters to a number format selected based on the collected one or more statistics, the second set of network parameters comprising (i) the first set of network parameters and/or another set of network parameters for the layer, or (ii) a set of network parameters for a subsequent pass of the neural network corresponding to the first set of network parameters.

FIG. 5

**Description**

TECHNICAL FIELD

This application is directed to methods and neural network accelerators for online selection of number formats for network parameters of a neural network.

BACKGROUND

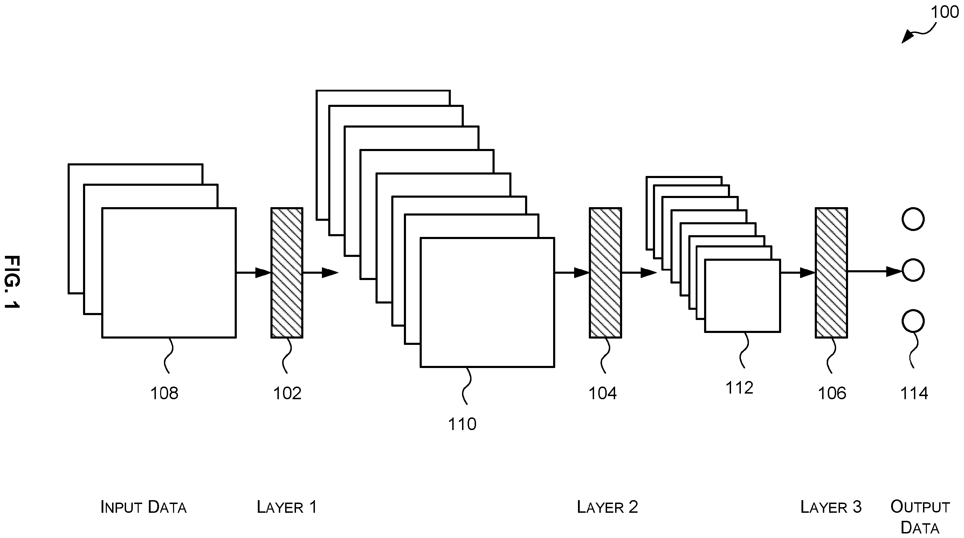

An Artificial Neural Network (ANN) comprises one or more interconnected layers that can be used for machine learning applications. In particular, an ANN can be used in signal processing applications, including, but not limited to, image processing and computer vision applications. FIG. 1 illustrates an example ANN 100 that comprises a plurality of layers 102, 104, 106. Each layer 102, 104, 106 receives input data, and processes the input data in accordance with the layer to produce output data. The output data is either provided to another layer as the input data or is output as the final output data of the ANN. For example, in the ANN 100 of FIG. 1, the first layer 102 receives the original input data 108 to the ANN 100 and processes the input data in accordance with the first layer 102 to produce output data 110. The output data 110 of the first layer 102 becomes the input data to the second layer 104, and the second layer 104 processes the input data 110 in accordance with the second layer 104 to produce output data 112. The output data 112 of the second layer 104 becomes the input data to the third layer 106, and the third layer 106 processes the input data 112 in accordance with the third layer 106 to produce output data 114. The output data 114 of the third layer 106 is then output as the final output data of the ANN. Where the ANN is used for classification, the final output data may be a vector of length A, wherein $A$ is the number of classes and each value in the vector represents the probability of a certain class.

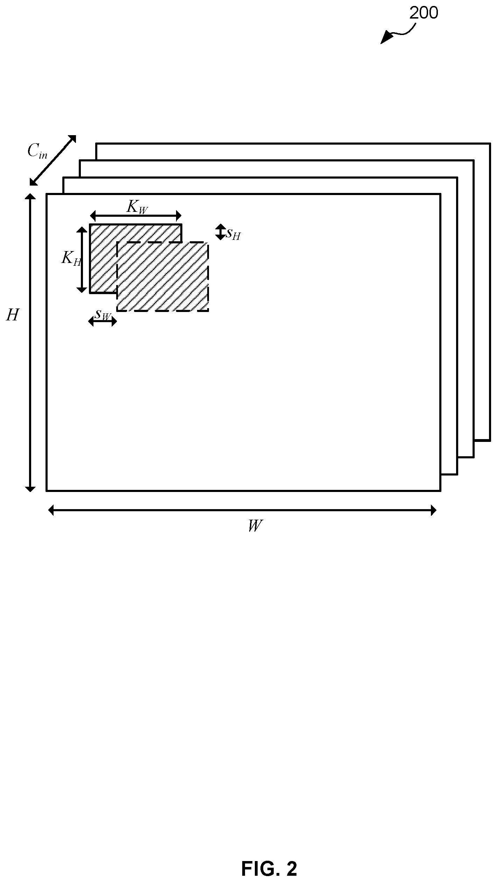

The data 200 input to and output from a layer of an ANN can be described as a tensor. As is known to those of skill in the art, a tensor is a generalization of vectors and matrices and can be considered as an n-dimensional array. A vector is a one-dimensional tensor, and a matrix is a two-dimensional tensor. The tensors in an ANN are often, but are not necessarily, four-dimensional. Reference is made to FIG. 2 which illustrates an example four-dimensional (4D) tensor 200 in which one dimension (e.g. corresponding to the batch size) has been suppressed for visualisation purposes. The 4D tensor 200 may be described as comprising one or more 3D tensors that comprises $C_{in}$ planes of data, where each plane has a dimension $W \times H$. Each plane may be referred to as a channel of the tensor. The number of 3D tensors may be referred to as the batch size. Each 3D tensor may be, for example, an image. An element of a tensor may be referred to as a tensel, akin to how an element of a picture is referred to as a pixel.

The processing that is performed on the input data to a layer depends on the type of layer. For example, each layer of an ANN may be one of a plurality of different types. Example ANN layer types include, but are not limited to, a convolution layer, an activation layer, a normalisation layer, a pooling layer, and a fully connected layer. It will be evident to a person of skill in the art that these are example ANN layer types and that this is not an exhaustive list and there may be other ANN layer types.

A convolution layer convolves the input data with weights associated with the layer. Specifically, each convolution layer is associated with a plurality of weights $k_1 \dots k_g$, which may also be referred to as filter weights or coefficients. The weights are grouped to form one or more filters or kernels, and each filter may be associated with an offset bias *bias*. Each filter may have a dimension $K_W \times K_H \times C_{in}$ (i.e., each filter may comprise a set of $K_W \times K_H \times C_{in}$ weights $k$) and may be applied to the input data according to a convolution operation across steps $s_W$ and $s_H$ in the $W$ and $H$ directions as shown in FIG. 2. The step sizes $s_W$ and $s_H$ may be referred to as the strides of the convolution. The number and dimensions of filters and/or the number of weights per filter may vary between convolution layers. A convolutional neural network (CNN), which is a specific type of ANN that is effective for image recognition and classification, generally comprises a plurality of convolution layers.

An activation layer, which often, but not necessarily, follows a convolution layer, applies one or more activation functions to the input data to the layer. An activation function receives an input tensor and performs a certain non-linear mathematical operation on each value or element in the input tensor. In other words, the activation function operates on each value or element in the input tensor separately. In some examples, an activation layer may act as rectified linear unit (ReLU) by implementing an ReLU function or a Leaky Rectified Linear Unit (LReLU) by implementing a LreLU function.

A normalisation layer is configured to perform a normalising function, such as a Local Response Normalisation (LRN) function on the input data. A pooling layer performs a pooling function, such as a max, min or average function, to summarise subsets of the input data. The purpose of a pooling layer is thus to reduce the spatial size of the representation to reduce the number of parameters and computation in the network, and hence to also control overfitting.

A fully connected layer, which often, but not necessarily, follows a plurality of convolution and pooling layers, takes a two-dimensional tensor (e.g. a tensor with a batch size dimension and a channel dimension) of input data values and outputs a two-dimensional tensor (e.g. a tensor with a batch size dimension and a channel dimension). Where the ANN is used for classification, the output may have A channels where A is the number of classes, and each value in the tensor may represent the probability of a certain class. The output tensor is generated through a matrix multiplication of a set of weights, optionally followed by a bias offset. A fully connected layer thus receives a set of weights and may receive a bias.

Accordingly, each layer of an ANN receives input data values (e.g., an input tensor) and generates output data values (e.g., an output tensor); and some layers (such as, but not limited to, convolution layers and fully connected layers) also receive weights and/or biases. The input data values, output data values, weights and biases of the layers of ANN may collectively be referred to as the network parameters of the ANN.

Performing forward and backward passes of an ANN are often expensive to implement in terms of computation, bandwidth and power. Accordingly, neural network accelerators (NNAs) have been developed that allow ANNs, which may simply be referred to as neural networks, to be implemented in an efficient manner (e.g., in a manner that requires less silicon area or less processing power).

For an NNA to process a set of values each value is represented in a number format. Two common types of number formats are fixed point number formats and floating point number formats. As is known to those skilled in the art, a fixed point number format has a fixed number of digits after the radix point (e.g., decimal point or binary point). In contrast, a floating point number format does not have a fixed radix point (i.e., it can "float"). In other words, the radix point can be placed in multiple places within the number. While representing the network parameters of an ANN in a floating point number format may allow more accurate or precise output data to be produced, processing network parameters in a floating point number format in hardware is complex which tends to increase the silicon area, power consumption, memory and bandwidth consumption, and complexity of the hardware compared to hardware that processes network parameters in other formats, such as, but not limited to, fixed point number formats. Accordingly, an NNA may be configured to represent at least some of the network parameters of an ANN in another format, such as a fixed point number format, to reduce the area, power consumption, memory and bandwidth consumption, and complexity of the hardware logic.

Generally, the fewer the bits that are used to represent the network parameters of an ANN (e.g., input data values, weights, biases, and output data values), the more efficiently the ANN can be implemented in hardware. However, typically the fewer the bits that are used to represent the network parameters of an ANN (e.g., input data values, weights, biases, and output data values) the less accurate the ANN becomes. Accordingly, it is desirable to identify number formats for representing the network parameters of the ANN that balance the number of bits used to represent the network parameters and the accuracy of the ANN.

The embodiments described below are provided by way of example only and are not limiting of implementations which solve any or all of the disadvantages of methods and systems for identifying number formats for representing the network parameters of an ANN.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described herein are methods and neural network accelerators for online selection of number formats for network parameters of a neural network. The neural network accelerators comprise: at least one network processing hardware unit configured to receive network parameters for layers of the neural network and perform one or more neural network operations on the received network parameters in accordance with the neural network; a statistics collection hardware unit configured to collect one or more statistics on a first set of network parameters for a layer while the neural network accelerator is performing a pass of the neural network; and a format conversion hardware unit configured to convert a second set of network parameters to a number format selected based on the collected one or more statistics, the second set of network parameters comprising (i) the first set of network parameters and/or another set of network parameters for the layer, or (ii) a set of network parameters for a subsequent pass of the neural network corresponding to the first set of network parameters.

A first aspect provides a method of dynamically selecting a number format for a set of network parameters of a neural network, the method comprising: collecting, using a statistics collection hardware unit of a neural network accelerator, one or more statistics on a first set of network parameters for a layer of the neural network while the neural network accelerator is performing a pass of the neural network; selecting a number format based on the collected one or more statistics; converting, using a format conversion hardware unit of the neural network accelerator, a second set of network parameters to the selected number format, the second set of network parameters comprising (i) the first set of network parameters and/or another set of network parameters for the layer, or (ii) a set of network parameters for a subsequent pass of the neural network corresponding to the first set of network parameters; and processing, using one or more network processing hardware units of the neural network accelerator, the converted second set of network parameters in accordance with the neural network to perform the pass of the neural network or to perform the subsequent pass of the neural network.

A second aspect provides a neural network accelerator comprising: at least one network processing hardware unit configured to receive network parameters for layers of a neural network and perform one or more neural network operations on the received network parameters in accordance with the neural network; a statistics collection hardware unit configured to collect one or more statistics on a first set of network parameters for a layer while the neural network accelerator is performing a pass of the neural network; and a format conversion hardware unit configured to convert a second set of network parameters to a number format selected based on the collected one or more statistics, the second set of network parameters comprising (i) the first set of network parameters and/or another set of network parameters for the layer, or (ii) a set of network parameters for a subsequent pass of the neural network corresponding to the first set of network parameters.

The neural network accelerator may be configured to provide the collected one or more statistics to an external unit coupled to the neural network accelerator, the external unit configured to select the number format based on the collected one or more statistics in accordance with a format selection algorithm.

The external unit may be central processing unit that controls the operation of the neural network accelerator.

The external unit may be distinct from a central processing unit that controls the operation of the neural network accelerator.

The neural network accelerator may further comprise a format selection hardware unit that is configured to select the number format based on the collected statistics in accordance with a format select algorithm.

The neural network accelerator may be configured to perform a pass of the neural network in a plurality of hardware passes of the neural network accelerator, wherein for each hardware pass the neural network accelerator receives a set of input data corresponding to all or a portion of the input data to a layer of the neural network and processes that set of input data in accordance with at least the layer of the neural network for the pass.

The first set of network parameters may comprise all network parameters of a same type for the layer, and the second set of network parameters comprises a set of network parameters for a subsequent pass of the neural network that correspond to the first set of network parameters.

The first set of network parameters may comprise all of the network parameters of a particular type for a layer that are in a hardware pass of the neural network accelerator for the pass of the neural network.

The second set of network parameters may comprise all of the network parameters of the particular type for the layer that are in another hardware pass of the neural network accelerator for the pass of the neural network.

The first set of network parameters may comprise a subset of the network parameters of a particular type for the layer that are in a hardware pass of the neural network accelerator for the pass of the neural network.

The second set of network parameters may comprise another subset of the network parameters of the particular type for the layer that are in the hardware pass of the neural network accelerator for the pass of the neural network.

The second set of network parameters may comprise the network parameters in a hardware pass for a subsequent pass of the neural network that correspond to the first set of network parameters.

The second set of network parameters may comprise the first set of network parameters.

The format conversion hardware unit may be configured to convert the first set of network parameters to a configurable number format prior to the first set of network parameters being processed by one or more of the at least one network processing hardware unit; and the statistics collection hardware unit may be configured to collect the statistics on the first set of network parameters prior to the format conversion performed by the format conversion hardware unit.

The format conversion hardware unit may be configured to convert the first set of network parameters to a configurable number format prior to the first set of network parameters being processed by one or more of the at least one network processing hardware unit; the statistics collection hardware unit may be configured to collect the statistics on the first set of network parameters after the format conversion performed by the format conversion hardware unit; and the second set of network parameters may comprise (i) another set of network parameters for the layer for the pass of the neural network, or (ii) a set of network parameters for a subsequent pass of the neural network corresponding to the first set of network parameters.

The neural network accelerator may further comprise: another statistics collection hardware unit configured to collect one or more statistics on a third set of network parameters for another layer of the neural network while neural network accelerator is performing the pass of the neural network; and another format conversion hardware unit configured to convert a fourth set of network parameters to a number format selected based on the one or more statistics collected by the other statistics collection hardware unit, the fourth set of network parameters comprising (i) the third set of network parameters and/or another set of network parameters for the other layer, or (ii) a set of network parameters for a subsequent pass of the neural network corresponding to the third set of network parameters.

The pass of the neural network and the subsequent pass of the neural network may be forward passes of the neural network.

The pass of the neural network and the subsequent pass of the network may be backward passes of the neural network.

A third aspect provides a computer system comprising: the neural network accelerator of the second aspect, and an external unit configured to select the number format based on the collected one or more statistics in accordance with a format selection algorithm.

A fourth aspect provides a system comprising a neural network accelerator comprising one or more network processing hardware units, a statistics collection hardware unit, and a format conversion hardware unit, the system configured to perform the method of the first aspect.

A fifth aspect provides a computer readable storage medium having stored thereon computer readable code configured to cause a processor and a neural network accelerator to perform the method of the first aspect when the code is run.

The neural network accelerators described herein may be embodied in hardware on an integrated circuit. There may be provided a method of manufacturing, at an integrated circuit manufacturing system, a neural network accelerator described herein. There may be provided an integrated circuit definition dataset that, when processed in an integrated circuit manufacturing system, configures the system to manufacture an integrated circuit that embodies a neural network accelerator described herein. There may be provided a non-transitory computer readable storage medium having stored thereon a computer readable description of a neural network accelerator that, when processed in an integrated circuit manufacturing system, causes the integrated circuit manufacturing system to manufacture an integrated circuit embodying the neural network accelerator.

There may be provided an integrated circuit manufacturing system comprising: a non-transitory computer readable storage medium having stored thereon a computer readable description of a neural network accelerator described herein; a layout processing system configured to process the computer readable description so as to generate a circuit layout description of an integrated circuit embodying the neural network accelerator; and an integrated circuit generation system configured to manufacture an integrated circuit embodying the neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a schematic diagram of an example artificial neural network (ANN);

FIG. 2 is a schematic diagram illustrating performing an example convolution operation on an example tensor in an ANN;

FIG. 3 is a block diagram of an example neural network accelerator (NNA) with format conversion hardware units and statistics collection hardware units;

FIG. 4 is a schematic diagram illustrating how the input tensor and the weights tensor of an example neural network layer may be divided into chunks for processing in a hardware pass of an NNA;

FIG. 5 is a schematic diagram illustrating example relationships between a statistics collection hardware unit and its associated format conversion hardware unit;

FIG. 6 is a set of graphs illustrating the format convergence time for layers of a first example neural network when the formats are selected online in accordance with the methods described herein;

FIG. 7 is a set of graphs illustrating the format convergence time for layers of a second example neural network when the formats are selected online in accordance with the methods described herein;

FIG. 8 is a block diagram of an example statistics collection hardware unit;

FIG. 9 is a block diagram of an example convolution processing unit;

FIG. 10 is a block diagram of an example convolution engine;

FIG. 11 is a flow diagram of an example method for performing online number format selection for network parameters of a neural network;

FIG. 12 is a graph of the Top-1 accuracy for example classification neural networks when the network parameters are represented using number formats selected in accordance with the method of FIG. 11;

FIG. 13 is a graph of the Top-5 accuracy for example classification neural networks when the network parameters are represented using number formats selected in accordance with the method of FIG. 11;

FIG. 14 is a block diagram of an example computer system in which a neural network accelerator described herein may be implemented; and

FIG. 15 is a block diagram of an integrated circuit manufacturing system for generating an integrated circuit embodying a neural network accelerator described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.
Embodiments will now be described by way of example only.
As described above, ANNs are often expensive to implement in terms of computation, bandwidth and power. Accordingly, neural network accelerators (NNAs) have been developed that allow ANNs to be implemented in an efficient manner (e.g., in a manner that requires less silicon area or less processing power).
An NNA is hardware that is designed to accelerate the processing of an artificial neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs have one or more network processing hardware units (which may simply be referred to as processing units) which are each designed to accelerate one or more neural network operations. A neural network operation is defined herein as an operation that is used to implement all or a part of a neural network layer. A neural network layer may be implemented by one or more neural network operations. Example neural network operations include, but are not limited to, convolution operations, non-linear operations, pooling operations and normalisation operations.
An NNA may therefore have, for example, a convolution processing unit which is configured to accelerate convolution operations, an activation processing unit which is configured to accelerate non-linear operations, a pooling processing unit which is configured to accelerate pooling operations, and/or a normalisation processing unit configured to accelerate normalisation operations. It will be evident to a person of skill in the art that this is just an example set of network processing hardware units that an NNA may have, and NNAs may have additional network processing hardware units, fewer network processing hardware units or a different combination of network processing hardware units.
As described above, while representing the network parameters of an ANN in a floating point number format may allow more accurate or precise output data to be produced by the ANN, processing network parameters in a floating point number format in hardware is complex which tends to increase the silicon area, power consumption, memory and bandwidth consumption, and complexity of the hardware compared to hardware that processes network parameters in other formats, such as, but not limited to, fixed point number formats. Accordingly, an NNA may be configured to represent and process at least a portion of the network parameters of an ANN in another number format, such as a fixed point number format, to reduce the area, power consumption, memory and bandwidth consumption, and complexity of the hardware logic.
There is a plurality of different types of number formats. Each number format type defines the parameters that form a number format of that type and how the parameters are interpreted. One example number format type may specify that a number or value is represented by a $b$-bit mantissa $m$ and an exponent $exp$ and the number is equal to $m * 2^{exp}$. As described in more detail below, some number format types can have configurable parameters, which may also be referred to as quantisation parameters, that can vary between number formats of that type. For example, in the example number format described above, the bit width $b$ and the exponent $exp$ may be configurable. Accordingly, a first number format of that type may use a bit width $b$ of 4 and an exponent $exp$ of 6, and a second, different, number format of that type may use a bit width $b$ of 8 and an exponent $exp$ of -3.

While all the types of network parameters (e.g., input data values, weights, biases and output data values) for all layers of an ANN may be represented using a single number format, this does not generally produce an ANN that is optimal in terms of size and accuracy. This is because different layers of an ANN tend to have different ranges of values. For example, one layer may have input data values between 0 and 6 whereas another layer may have input data values between 0 and 500. Accordingly, using a single number format may not allow either set of input data values to be represented efficiently or accurately. As a result, the network parameters of an ANN may be divided into sets of network parameters and an individual number format may be selected for one or more of the sets. Preferably each set of network parameters comprises related or similar network parameters. As network parameters of the same type for the same layer tend to be similar (e.g. in terms of function and range of values), each set of network parameters may be all or a portion of a particular type of network parameter for a layer. For example, each set of network parameters may be all or a portion of the input data values of a layer; all or a portion of the weights of a layer; all or a portion of the biases of a layer; or all or a portion of the output data values of a layer. Whether or not a set of network parameters comprises all, or only a portion, of the network parameters of a particular type for a layer may depend on the hardware that is to implement the ANN. For example, some NNAs may only support a single number format per network parameter type per layer, whereas other NNAs may support multiple number formats per network parameter type per layer.

In methods known to the Applicant for selecting number formats for network parameters of an ANN, which is not an admission that the methods are known outside the Applicant company or are well-known, the number formats are selected before the ANN is implemented on the NNA based on, for example, training data. In other words, the number formats for sets of network parameters of an ANN are selected at compile time rather than run time/inference time. For example, in one example method (which may be referred to herein as the full range method or the minimum/maximum method), test or training data may be sent through the ANN to determine expected ranges for the input data values of each layer, and number formats for the input data for each layer may be selected to cover the expected range. Then, the ANN is implemented on the NNA using the selected formats to represent the input data values of each layer. In other words, in methods known to the Applicant, the number formats for a set of network parameters are selected once, and each pass (e.g. each forward pass or each backward pass) of the neural network uses the same number formats.

However, there are situations where it may be beneficial to be able to select number formats online or on the fly, i.e., as the ANN is running on the NNA and processing input data (e.g. the NNA is performing a forward pass of the ANN to perform an inference, or the NNA is performing a backward pass of the ANN (e.g. during training of the ANN)). For example, this may be advantageous when the input data changes over time (e.g., if the input images are from a camera mounted on a car emerging from a tunnel into daylight, the magnitude of the values in the image may change significantly). Other example scenarios where this may be useful include, but are not limited to, (i) during training when a number format is used for the gradients, since at the beginning of the training there are large gradients which during the course of training get progressively smaller; and (ii) where offline format selection was not performed (e.g., because test data was not available at compile time).

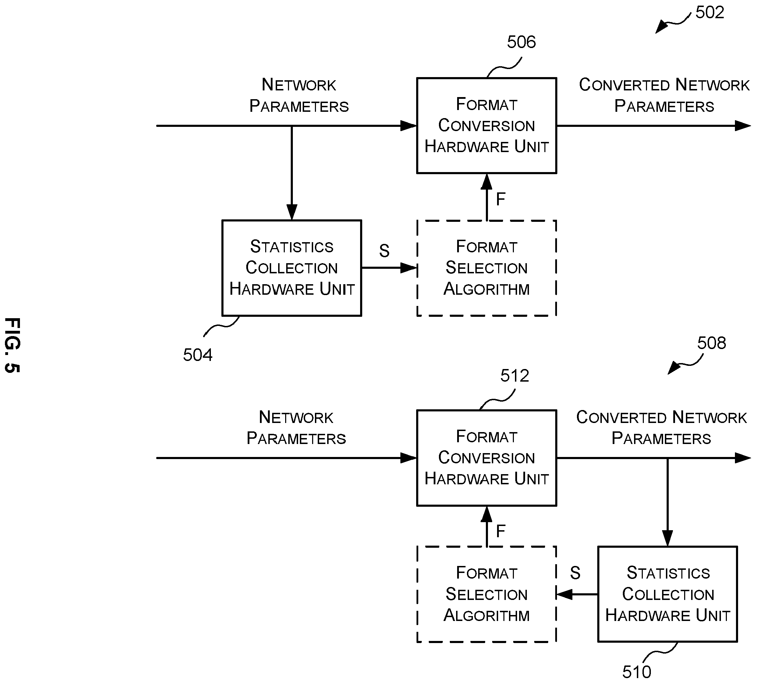

Number formats may be initialised using, for example, one of the aforementioned methods known to the Applicant for format selection in an "offline" fashion. Alternatively, they may be initialised to a default starting format. The methods for online format selection described herein may then be used over multiple passes to (i) converge to suitable number formats and (ii) to track suitable formats over time due, for example, to changes in the input data to the ANN. Applying the methods described herein on a pass of a neural network, when executed on an NNA, results in the number formats for a (part of a) tensor being updated based on relevant statistics collected for (part of) that same tensor. Even where the input data to the ANN is fixed across passes of the network on the NNA, it is expected that the number formats will take multiple passes to converge and stabilise, since (for example) the input data of later low level layers of the network depends on the choice of number formats earlier in the network. It is expected, and has been observed, that number formats for data early in the network converge before number formats for data later in the network, due to this chain of dependency between low level layers. Once a number format has converged, if, for example, the input data to a low level layer were to change, then the corresponding formats will again converge to a suitable format for the new input data, which gives the desired ability to track suitable formats overtime. The implementation of the methods described herein may therefore be chosen to promote convergence and tracking, and avoid metastability and instability, as described below with reference to FIG. 5.

Accordingly, described herein are methods, neural network accelerators (NNAs) and systems for dynamically selecting number formats for network parameters of an ANN on the fly - i.e., while the ANN is running on an NNA (e.g. a forward pass or backward pass of the ANN is being performed). The methods include dynamically collecting, using statistics collection hardware integrated into an NNA, one or more statistics on one or more sets of neural network parameters for an ANN while the NNA is performing a pass of the neural network; selecting one or more number formats based on the collected statistics; and converting, using format conversion hardware integrated into the NNA, one of the following to the selected format: (i) the set of network parameters and/or another set of network parameters in the current pass of the neural network, or (ii) a set of network parameters in a subsequent pass of the neural network.

The methods, NNAs, and systems described herein allow (i) number formats for network parameters of a neural network to be selected without any prior knowledge about the input data at compile time; and (ii) number formats to be dynamically adjusted as the input data to the neural network changes (i.e., it allows the number formats to be adaptable).

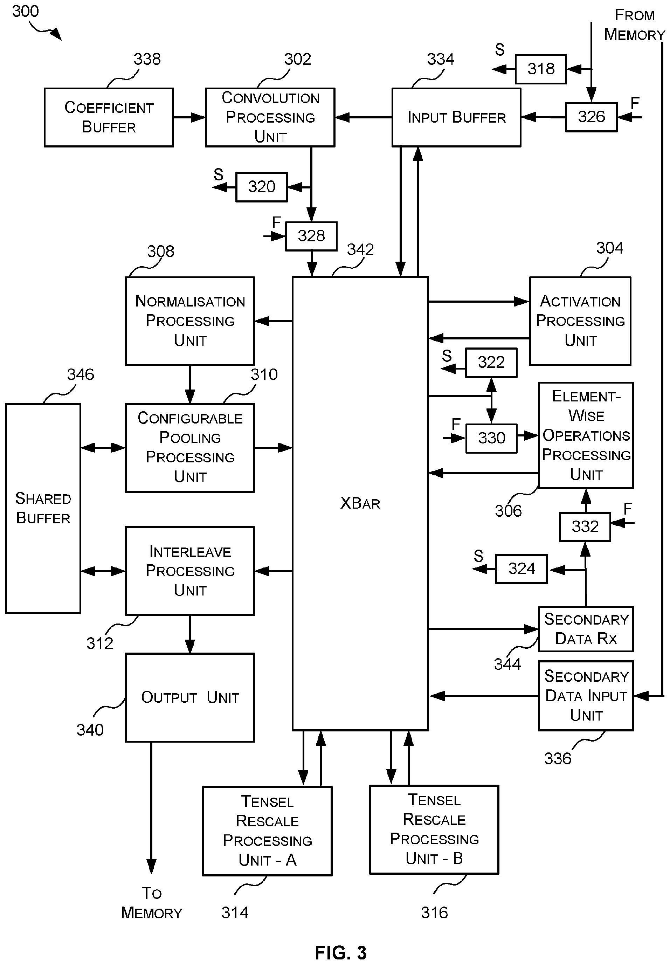

Reference is now made to FIG. 3 which illustrates an example NNA 300 which can dynamically select and adjust the formats of network parameters while the NNA is performing a pass (e.g. a forward pass or a backward pass) of the neural network. The NNA 300 comprises one or more network processing hardware units 302, 304, 306, 308, 310, 312, 314, 316, which are each configured to accelerate one or more neural network operations; one or more statistics collection hardware units 318, 320, 322, 324 which are each configured to dynamically collect one or more statistics on a set of network parameters for a layer of the ANN while the NNA is performing a pass of the neural network; and one or more format conversion hardware units 326, 328, 330, 332 which are configured to convert a set of network parameters to a configurable or selectable number format. The one or more statistics collected by a statistics collection hardware unit can be used to select a number format which can be applied to the set of network parameters from which the statistics were generated, another set of network parameters for the layer, or a set of network parameters in a subsequent pass of the neural network that are related to the original set of network parameters. This allows the number formats for one or more sets of network parameters to be selected and/or adjusted on the fly (i.e., while the NNA is performing a forward pass or a backward pass of the NNA).

As shown in FIG. 3, the NNA may also comprise one or more buffers or units 334, 336, 338 for receiving data input to the NNA and/or an output unit 340 for outputting data from the NNA. For example, the example NNA 300 in FIG. 3 comprises an input buffer 334 which is configured to receive and store input data received from memory, a secondary data input unit 336 which is configured to receive input data received from memory, and a coefficient buffer 338 which is configured to receive weights for a convolution layer.

Each network processing hardware unit 302, 304, 306, 308, 310, 312, 314, 316 comprises hardware logic configured to accelerate performing one or more neural network operations on input data. Specifically, each network processing hardware unit 302, 304, 306, 308, 310, 312, 314, 316, is configured to receive input data, perform, using internal hardware logic, one or more operations on the received input data, and output the results of the one or more operations, which may be referred to as the output data. Since input data to a layer may be processed by multiple hardware processing units to generate output data for that layer, the input data to a hardware unit may or may not correspond to the input data to a layer, and the output data of a hardware unit may or may not correspond to the output data of a layer.

The example NNA 300 of FIG. 3 comprises the following network processing hardware units: a convolution processing unit 302 which comprises one or more convolution engines configured to perform convolution operations on the received input data, an activation processing unit 304 which is configured to perform non-linear operations on the received input data, an element-wise operations processing unit 306 which is configured to perform element-wise operations on the received input data, a normalisation processing unit 308 which is configured to perform normalisation operations on the received input data, a configurable pooling processing unit 310 which comprises one or more pooling engines configured to selective perform a pooling operation or a depth-wise convolution operation on the received input data, an interleave processing unit 312 which is configured to performing interleaving or rearranging of the received input data, and tensel rescale processing units 314, 316 which are configured to scale or rescale the input data. Each of these network processing hardware units are described in more detail below. One or more of the network processing hardware units may be implemented as fixed-function circuitry. It will be evident to a person of skill in the art that this is just an example set of network processing hardware units and that other NNAs may have additional network processing hardware units, fewer network processing hardware units and/or different network processing hardware units.

The example NNA 300 of FIG. 3 is configured to perform a pass (e.g. a forward pass or a backward pass) of a ANN over one or more hardware passes of the NNA. A hardware pass of the NNA is defined herein as the loading of input data into the NNA and processing the input data using one or more network processing hardware units to generate processed data, or output data. The output data of a hardware pass may be output from the NNA to memory via the output unit 340 or, stored in the NNA for use in a subsequent hardware pass. The memory which is used to store the output data of a hardware pass may be memory that is external to the NNA, but is internal to the chip on which the NNA is situated (i.e., on-chip memory), or memory that is external to the NNA and is external to the chip on which the NNA is situated (i.e., off-chip memory).

The NNA may have hardware constraints (e.g., the size of the input buffer 334, coefficient buffer 338 and/or shared buffer 346, number of convolution engines, number of pooling engines) that limit the processing that can be performed in a hardware pass, or the order in which, or number of times that, a hardware pass can use network processing hardware units. Where all of the processing to implement a neural network cannot be completed in a single hardware pass of the NNA 300, the processing may have to be split into multiple hardware passes of the NNA 300.

In some cases, the hardware passes to perform or implement a pass of a neural network may be identified by first mapping each layer of the neural network to a sequence of one or more low level layers, wherein a low level layer is a set of one or more operations that can be performed by a single hardware processing unit of the neural network accelerator. In other words, each low level layer corresponds to a hardware processing unit of the neural network accelerator. The low level layers that a layer is mapped to may depend on whether a forward pass or a backward pass is to be performed. For example, one set of operations may be used to implement or process a forward pass of a layer of a neural network and a different set of operations may be used to implement or process a backward pass of that layer.

Once the layers of the neural network have been mapped to low level layers, the low level layers are divided into one or more layer groups, wherein each layer group comprises a sequence of one or more low level layers that can be implemented on the NNA 300. The sequences of lower level layers that can be implemented by the NNA 300 depend on the network processing hardware units of the NNA and how they can be connected to process data. For example, since the example NNA 300 of FIG. 3 has a convolution processing unit and a configurable pooling processing unit that can be connected to form a pipeline, the NNA 300 can perform convolution computations for a layer and pooling computations for a layer together. This means that a layer group may comprise a low level convolution layer followed by a low level pooling layer. In contrast, since the NNA 300 comprises only a single configurable pooling processing unit it cannot perform pooling operations for two different low level layers. Therefore, in this example a layer group cannot comprise two pooling layers. In other words, since each low level layer corresponds to a hardware processing unit, each layer group comprises a sequence of hardware processing units that can be implemented by the neural network accelerator.

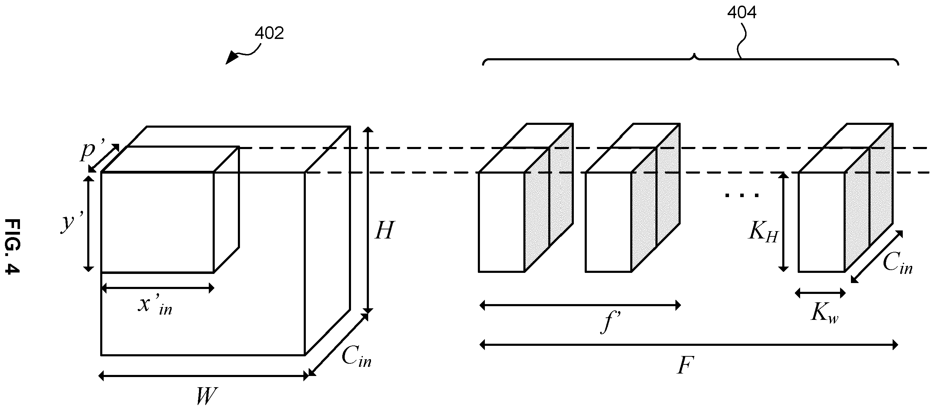

Once the low level layers have been split into one or more layer groups, it is determined, for each layer group, whether that layer group can be implemented in a single hardware pass of the neural network accelerator. Specifically, depending on the NNA hardware constraints, it may not be possible to perform all of the processing associated with a layer group in the same hardware pass. For example, the input tensor to the first layer of the layer group may be too large to be processed in a single hardware pass. Accordingly, if it is determined that a layer group cannot be implemented in a single hardware pass of the neural network that layer group is divided into a plurality of hardware passes. Dividing a layer group may comprising dividing the input tensor in one or more dimensions. For example, as shown in FIG. 4 an input tensor 402 to the first layer of the layer group may be split along one or more of the width $W$, height $H$, or channel $C_{in}$ dimensions; and/or for a convolution layer, the convolution kernel 404 may be split along one or more of the input channel $C_{in}$ dimension and the output channel dimension F (which may also be referred to as the filter dimension). An example method for identifying hardware passes to perform a pass of a neural network is described in the Applicant's UK patent application no. 2209584.8, which is herein incorporated by reference in its entirety.

In the example NNA 300 of FIG. 3 the network processing hardware units are connected to a crossbar ("Xbar") 342 which can connect, on a per hardware pass basis, a selected set of network processing hardware units in a selected order to form a pipeline of network processing hardware units through which the input data for the hardware pass is passed. Accordingly, at each hardware pass the NNA receives information indicating which network processing hardware units are active, and the order in which the active network processing hardware units are to process the input data. The crossbar 342 then connects the input and output ports of the identified network processing hardware units accordingly. The crossbar 342 may comprise a plurality of input ports (shown in FIG. 3 by arrows pointing into the crossbar 342), and a plurality of output ports (shown in FIG. 3 by arrows pointing out from the crossbar 342).

Having a crossbar 342 that can dynamically connect the network processing hardware units in a plurality of different orders, increases the number of different layer combinations that can be in a layer group, compared to having fixed connections between the network processing hardware units. This can decrease the number of hardware passes to implement an ANN. However, it will be evident to a person of skill the art that this is just an example only and other NNAs may connect the network processing hardware units in another manner. For example, in other NNAs the network processing hardware units may be connected in a fixed order (e.g., to form a fixed pipeline).

To perform a pass of a neural network on a neural network accelerator, the network parameters are represented in a number format such as, but not limited to, a floating point number format or a fixed point number format. The term "network parameter" is used herein to mean any tensors or parts of tensors used in performing the pass of a neural network and include, but are not limited to, the input data values of a low level layer (which may or may not correspond to the input data values of a layers of the neural network), the output data values of a low level layer (which may or may not correspond to the output data values of a layer of the neural network), the weights for a low level layer, and the biases for a low level layer. Since different low level layers may have different input and output value ranges it may not be efficient to use a single number format for all the network parameters. For example, one low level layer may have input data values between 0 and 6 whereas another low level layer may have input data values between 0 and 500. Accordingly, using a single number format may not allow either set of input data values to be represented efficiently or accurately. Therefore, the NNA 300 comprises one or more format conversion hardware units 326, 328, 330, 332 which can dynamically convert a set of network parameters to a selected format. Specifically, each format conversion hardware unit 326, 328, 330, 332 is configured to: receive a set of network parameters; receive information identifying a desired number format (identified as "F" in FIG. 3); and dynamically convert the received set of network parameters to the desired number format. This allows number formats for network parameters to be selected and implemented on a per low level layer basis, and even on a per hardware pass basis for each low level layer.

In the example NNA 300 of FIG. 3 there are four format conversion hardware units 326, 328, 330, 332. Specifically, there is a first format conversion hardware unit 326 that is configured to convert input data received from memory to a desired number format prior to storing the input data in the input buffer 334; there is a second format conversion hardware unit 328 which is configured to convert the output data of the convolution processing unit 302 to a desired number format prior to providing the output data to another unit of the NNA; there is a third format conversion hardware unit 330 which is configured to convert the main input data to the elementwise operations processing unit 306 to a desired number format prior to providing the main input data to the element-wise operations processing unit 306; and there is a fourth format conversion hardware unit 332 that is configured to convert the secondary input data to the element-wise operations processing unit 306 to a desired number format prior to providing the secondary input data to the element-wise operations processing unit 306.

It will be evident to a person of skill in the art that this is only an example set of format conversion hardware units. In other examples, there may be fewer format conversion hardware units or there may be additional format conversion hardware units; and/or the format conversion hardware units may be placed in different locations (e.g., the format conversion hardware units may convert the input or output of different units of the NNA). For example, in addition to the format conversion hardware units shown in FIG. 3, or instead of one or more of the format conversion hardware units shown in FIG. 3, there may be a format conversion hardware unit on the input to the normalisation processing unit 308, a format conversion hardware unit on the output of the normalisation processing unit 308, a format conversion hardware unit on the output of the element-wise operations processing unit 306, and/or a format conversion hardware unit on the output of the output unit 340. Although these examples all relate to input data or output data of a unit of the NNA, in other examples, there may be one or more format conversion hardware units that relate to the weights and/or the biases. For example, there may be a format conversion hardware unit on the input to and/or output from the coefficient buffer 338 (where the weights and biases for a convolution layer are stored). Again, it will be evident to those of skill in the art that these are examples only and a format conversion hardware unit can be placed on the input or output of any unit of the NNA.

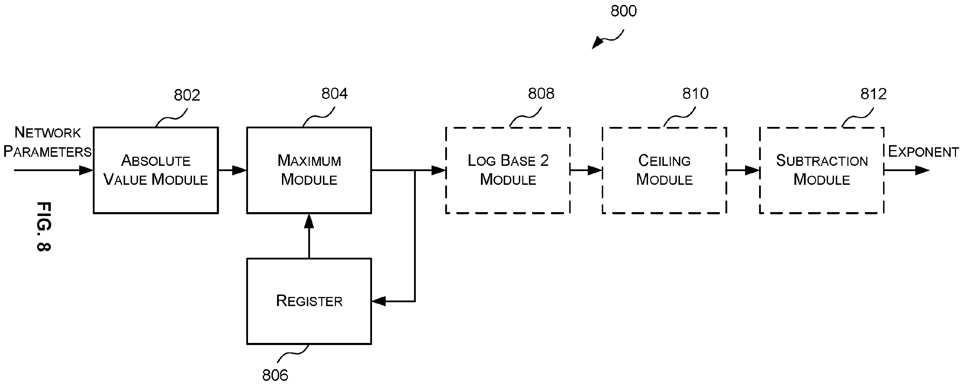

As described above, in methods known to the Applicant, the number formats for the network parameters of the ANN are selected before the ANN is implemented on the NNA (i.e., the number formats are selected offline). To allow the number formats for a set of network parameters to be dynamically selected (that is, "on the fly" or "online", i.e., while the NNA is performing a forward or backward pass of the neural network), the NNA 300 comprises one or more statistics collection hardware units 318, 320, 322, 324. Each statistics collection hardware unit 318, 320, 322, 324 is configured to receive a first set of network parameters input to or output from a unit of the NNA, and generate or collect one or more statistics (denoted "S" in FIG. 3) for that set of network parameters which can be used to select a number format in accordance with a format selection algorithm. As described in more detail below, the format selection algorithm may be implemented or executed by the NNA (e.g., a fixed-function hardware unit within the NNA, not shown in FIG. 3) or a unit external to the NNA (e.g., a host CPU, an external processor, or an external fixed-function hardware unit). The one or more statistics that are generated by a statistics collection hardware unit may be chosen to correspond to the format selection algorithm used to select a number format therefrom. For example, a statistics collection hardware unit outputting statistics for use in a minimum/maximum format selection method may ascertain the extrema of the values of the network parameters as required by that format selection method, as described in more detail below with reference to FIG. 8. Example format selection algorithms and statistics which may be generated will be described below. Collecting the one or more statistics via dedicated hardware within the NNA allows the one or more statistics to be generated quickly and does not increase the amount of data that has to be transferred out of the NNA. For example, if the statistics collection were performed outside the NNA, then the network parameters from which the statistics are collected or generated would have to be streamed out of the NNA, which would significantly increase the bandwidth to implement a neural network on the NNA.

Each statistics collection hardware unit 318, 320, 322, 324 may be associated with a format conversion hardware unit. The one or more statistics generated by a statistics collection hardware unit (and the number format selected therefrom) are used to control the format conversion performed by the associated format conversion hardware unit for a second set of network parameters that is related to the first set of network parameters (i.e. the network parameters from which the one or more statistics were generated). For example, in FIG. 3, the first statistics collection hardware unit 318 is associated with the first format conversion hardware unit 326 and controls the format conversion performed thereby, the second statistics collection hardware unit 320 is associated with the second format conversion hardware unit 328 and controls the format conversion performed thereby, the third statistics collection hardware unit 322 is associated with the third format conversion hardware unit 330 and controls the format conversion performed thereby, and the fourth statistics collection hardware unit 324 is associated with the fourth format conversion hardware unit 332 and controls the format conversion performed thereby. While in the example shown in FIG. 3 there is a statistics collection hardware unit for each format conversion hardware unit, this is an example only and in other examples there may be more format conversion hardware units than statistics collection hardware units or there may be more statistics collection hardware units than format conversion hardware units.

Accordingly, each statistics collection hardware unit 318, 320, 322, 324 collects or generates one or more statistics from a first set of network parameters for a layer of the ANN while the ANN is running on the NNA and processing data (e.g., when the NNA is performing a forward or backward pass of the neural network). A number format is selected from the one or more collected or generated statistics and a format conversion hardware unit is configured to convert a second set of network parameters to the selected number format. The set of network parameters that are converted to the selected number format is a set of network parameters in the current pass of the neural network that is related to the original set of network parameters or a set of network parameters in a subsequent pass of the neural network that is related to the original set of network parameters.

**Granularity of Statistics Collection, Format Selection, and Format Application**

A statistics collection hardware unit 318, 320, 322, 324 may be configured to collect or generate the one or more statistics at one of a plurality of granularities. As described above, where an NNA, such as the NNA 300 of FIG. 3 is configured to process a neural network in one or more hardware passes of a neural network, the hardware passes to implement a pass of a neural network may be identified by first mapping each layer of the neural network to a sequence of one or more low level layers, wherein a low level layer is a set of one or more operations that can be performed by a single network processing hardware unit of the neural network accelerator. Some layers may be mapped to a single low level layer whereas other layers may be mapped to multiple low level layers. The low level layers are then divided into one or more layer groups where a layer group comprises a sequence of low level layers that can be implemented by the neural network accelerator. Then, it is determined whether each layer group can be implemented in a single hardware pass of the neural network accelerator. If a layer group cannot be implemented in a single hardware pass of the neural network accelerator (due to, for example, hardware constraints), that layer group is further divided into a plurality of hardware passes.

In some cases, a statistics collection hardware unit 318, 320, 322, 324 may be configured to collect statistics on a low level layer basis. In other words, the set of network parameters from which the statistics are generated may comprise all, or substantially all, of the network parameters of a specific type for a low level layer for a pass of the neural network. For example, the set of network parameters from which the statistics are generated may comprise all or substantially all of the input data values, the output data values, or the weights for a low level layer of the ANN for a pass of the neural network. Since each low level layer corresponds to a single layer of the neural network, this can also be described as collecting statistics on a layer basis. Where a low level layer is part of a layer group that is implemented over multiple hardware passes, the statistics collection hardware unit 318, 320, 322, 324 may be configured to collect or generate the one or more statistics over the multiple hardware passes. For example, in some cases a statistics collection hardware unit 318, 320, 322, 324 may be configured to generate one or more statistics for each relevant hardware pass and combine the one or more statistics from the hardware passes. In some cases, a statistics collection hardware unit 318 may be configured to keep a running calculation of the one or more statistics that is updated each hardware pass. In such cases, the statistics collection hardware unit 318, 320, 322, 324, the NNA or another unit may comprise a storage unit (e.g. a register, a set of registers, or memory) to store the statistics and/or the running statistics.

In other cases, a statistics collection hardware unit 318, 320, 322, 324 may be configured to collect or generate one or more statistics on a hardware pass basis. In other words, the set of network parameters from which the statistics are generated may comprise all of the network parameters of a specific type for a low level layer in a hardware pass. For example, the set of network parameters from which the one or more statistics are generated may comprise all, or substantially all, of the input data values, the output data values, or the weights for a low level layer in a hardware pass.

In yet other cases, a statistics collection hardware unit 318, 320, 322, 324 may be configured to collect or generate one or more statistics on a sub-hardware pass basis or a partial hardware pass basis. In other words, the set of network parameters from which the statistics are generated may comprise only a subset of the network parameters of a specific type for a low level layer in a hardware pass. For example, the set of network parameters from which the one or more statistics are generated may comprise only a subset of the input data values, the output data values, or the weights for a low level layer in a hardware pass. The size of the subset may be predetermined based on one or more factors, such as the size of the buffers etc.

Where a statistics collection hardware unit is configured to collect or generate statistics for a particular type of data on a hardware pass basis, the statistics collection hardware unit may be configured to collect or generate statistics for that particular type of data each hardware pass related to a low level layer or only a subset of the hardware passes related to a layer. For example, in some cases a statistics collection hardware unit may only be configured to collect or generate statistics for a particular data type for the first hardware pass related to a low level layer. Similarly, where a statistics collection hardware unit is configured to collect or generate statistics for a particular data type on a partial hardware pass basis the statistics collection hardware unit may be configured to collect or generate statistics separately for each subset of network parameters of that type related to a layer of the ANN in a hardware pass or only some of the subsets of network parameters of that type related to a layer of the ANN in a hardware pass. For example, in some cases a statistics collection hardware unit may only be configured to collect or generate statistics for the first subset of network parameters of a particular type in hardware pass related to a layer.

As explained above, the one or more statistics generated or collected by a statistics collection hardware unit are used to select a number format in accordance with a format selection algorithm. A format conversion hardware unit is then configured to convert a set of network parameters to the selected number format. The set of network parameters which are converted to the selected number format and the set of network parameters from which the one or more statistics were generated (which may be referred to herein as the original set of network parameters) relate to the same layer of the ANN, however they may relate to the same pass of the neural network or to different passes of the neural network. For example, the original set of network parameters may relate to layer 1 of a first forward pass of the neural network and the second set of network parameters may relate to layer 1 of the first forward pass of the neural network or layer 1 of a second forward pass of the neural network.

In some cases, the set of network parameters that are converted to the selected number format may be the same as the original set of network parameters. In other words, in some cases, the selected format may be applied to the same set of network parameters from which the one or more statistics were generated or collected. For example, if the original set of network parameters comprises all of the input data values to the third low level layer in a first hardware pass for a first pass of the neural network, then all the input data values to the third low level layer in the first hardware pass for the first pass of the neural network are converted to the selected number format. Since, as described above, a layer may form part of a layer group that is implemented in multiple hardware passes, applying the selected format to the original set of network parameters may only be suitable if the statistics collection hardware unit is configured to collect or generate statistics on a hardware pass basis or a partial hardware pass basis since it may not be practical to hold up the processing of the layer until all network parameters for the layer have been processed by the statistics collection hardware unit.

The inventors have determined that applying the selected format to the original set of network parameters works most efficiently if the original set of network parameters can be buffered before they are converted. In such cases, the statistics collection hardware unit may collect the one or more statistics from the original set of network parameters prior to the original network parameters being stored in a buffer, and the corresponding format conversion hardware unit may convert the network parameters to the selected format after being retrieved from the buffer. In other words, the statistics collection hardware unit may analyse the input to the buffer whereas the associated format conversion hardware unit may convert the output of the buffer to the desired number format.

Where an NNA was originally designed to buffer the network parameters (i.e., it already has a buffer for storing the network parameters) then it may be possible to apply the selected format to the same network parameters from which the one or more statistics are collected or generated without adding a delay to the processing of the neural networks. For example, a statistics collection hardware unit may be situated so as to receive (and analyse) the input to the input buffer 334 and the associated format conversion hardware unit may be situated so as to receive (and convert) the output of the input buffer 334; and/or where the convolution engine has an accumulation buffer 906 (as described in more detail below) a statistics collection hardware unit may be situated so as to receive (and analyse) the input to the accumulation buffer 906 and the associated format conversion hardware unit may be situated so as to receive (and convert) the output of the accumulation buffer 906 to a desired number format It will be evident to those of skill in the art that these are examples only and that the same statistics collection hardware unit and format conversion hardware unit placement and configuration could be applied to any buffer in the NNA, such as, but not limited to, the shared buffer 346 and the coefficient buffer 338 of the NNA 300 FIG. 3.

The inventors have determined that applying the selected format to the original set of network parameters can work particularly well when the number of network parameters in a set of network parameters is selected such that all of the network parameters in the set of original network parameters can fit in the buffer at the same time. This may mean that the network parameters for a layer are divided into subsets, each of which can have a different number format. However, selecting and using different number formats for different subsets of the network parameters in a layer can produce inconsistent results across the layer (where a subset of the network parameters for a layer may be the network parameters in a hardware pass of a plurality of hardware pass or a subset of the network parameters in a single hardware pass). For example, the format for one subset of network parameters for a layer may converge faster than the number format for a different subset of network parameters for the layer producing inconsistent results for the different subsets. Convergence is described in more detail below.

In other cases, the set of network parameters that are converted to the selected number format include other network parameters for the same low level layer and pass of the neural network as the original network parameters.

The other network parameters may be network parameters in the same hardware pass as the original network parameters or in different hardware passes from the original network parameters. For example, (i) the original network parameters may comprise all of the input data for a low level layer of the ANN in a hardware pass for pass (e.g. forward pass or backward pass) of the neural network, and the set of network parameters that are converted to the selected number format may include the input data for the low level layer of the ANN in a subsequent hardware pass for the same pass (e.g. forward pass or backward pass) of the neural network; (ii) the original network parameters may comprise a first subset of the input data for a low level layer of the ANN in a hardware pass for a pass of the neural network, and the set of network parameters that are converted to the selected number format may include a subsequent subset of the input data for the low level layer of the ANN in the same hardware pass; or (iii) the original network parameters may comprise a first subset of the input data for a low level layer of the ANN in a hardware pass for a pass of the neural network, and the set of network parameters that are converted to the selected number format may include a subsequent subset of the input data for a low level layer of the ANN in the same hardware pass and the input data for that low level layer of the ANN in one or more subsequent hardware passes for the pass of the neural network. Since, as described above, a low level layer may form part of a layer group that is implemented in multiple hardware passes, applying the selected format to other network parameters for the same layer and pass of the neural network as the original network parameters may only be suitable if the statistics collection hardware unit is configured to collect or generate statistics on a hardware pass basis or a partial hardware pass basis. Using a subset of the network parameters of a particular type in a low level layer to select a number format for all the network parameters of that particular type in a low level layer may work well if the values of the particular type in the low level layer are relatively consistent across the low level layer (i.e., if the subset is representative of that type of network parameters in the low level layer), but may not work well if there is a lot of variability in the network parameters of the particular type for the low level layer.

In some cases, the set of network parameters that are converted to the selected number format include both the original network parameters and other network parameters for the same layer and pass of the neural network as the original network parameters. Since these cases involve applying the selected format to the original network parameters, the comments above with respect to the preference of a buffer and the location of the statistics collection hardware unit and its associated format conversion hardware unit with respect to the buffer apply equally to these cases.

In yet other cases, the set of network parameters that are converted to the selected number format include network parameters for the same low level layer as the original network parameters but for a subsequent pass of the neural network (e.g. a subsequent forward pass or a subsequent backward pass). In some cases, the set of network parameters that are converted to the selected number format include network parameters corresponding to the original set of network parameters for a different pass of the neural network. A set of network parameters for a pass of the neural network are said to correspond to a set of network parameters for another pass of the neural network if the two sets of network parameters occur at the same point in the ANN in both passes. For example, (i) the original network parameters may comprises all of the input data values for layer 3 of the ANN for a first forward pass the neural network, and the network parameters that are converted to the selected number format may comprise all of the input data values for layer 3 of the ANN for a second forward pass of the neural network; (ii) the original network parameters may comprise all of the input data values in hardware pass 2 of layer group 1 that relate to layer 5 of an ANN for a first forward pass of the neural network, and the network parameters that are converted to the selected number format may comprise all of the input data values in hardware pass 2 of layer group 1 that relate to layer 5 of an ANN for a second forward pass of the neural network; or (iii) the original network parameters may comprise all of the input data values in subset 1 of hardware pass 2 of layer group 1 that relate to layer 5 of an ANN for a first forward pass of the neural network, and the network parameters that are converted to the selected number format may comprise all of the input data values in subset 1 of hardware pass 2 of layer group 1 that relate to layer 5 of an ANN for a second forward pass of the neural network. Testing has shown that in many cases performing the statistics collection and format conversion for input data to a layer or low level layer on a per layer basis and applying the selected format to the next pass of the neural network produces good results as it produces a consistent result across a layer (i.e., for all values of the same type for a layer). For weights good results can be achieved if the statistics collection is performed on a per layer basis or a per output channel basis and applying the selected format to the next pass of the neural network.

In some cases, for each hardware pass the format conversion hardware units that are active in that hardware pass (e.g. the format conversion hardware units that will receive network parameters) receive information indicating the desired number format(s) for that hardware pass that is/are to be applied to the received network parameters. In such cases, the CPU controlling the NNA, the NNA itself, or another device may maintain a data structure (e.g. a table in main memory) of the number formats used in each hardware pass, and when a new format is selected for a hardware pass that data structure is updated. In other cases, instead of maintaining a data structure of the number formats used in each hardware pass, a data structure of the statistics used to select number formats may be maintained, and number formats are generated from those statistics, e.g. on the next pass of the neural network. This is particularly useful when the statistics are collected for one pass of the neural network and are applied in a subsequent pass of the neural network. Moreover, as described in more detail below, this allows the statistics collection, format selection and updating of the format to be paused or stopped to effectively freeze the formats at a particular time (e.g. after a certain number of passes in one direction (e.g. after a certain number of forward passes), after the formats have converged etc.)

In some cases, data output from one low level layer may become input data to a next low level layer. Depending on the placement of the format conversion hardware units, this may cause that data to be converted twice which is undesirable. For example, if the output of the convolution processing unit 302 of FIG. 3 is sent to the output unit 340 via the crossbar 342 and output to memory it may have been quantised by the format conversion hardware unit 328. If that data is later read back in as the input data to another hardware pass and stored in the input buffer 334, that data may again be quantised by the format conversion hardware unit 326. To ensure that the data is not quantised twice according to different formats, which may introduce avoidable quantisation error, it may be desirable that both format conversion hardware units apply the same number format. Accordingly, in general it may be desirable to configure the format conversion hardware units to ensure that any format conversion hardware units that operate on the same data apply the same number formats thereto.

**Number Formats**

In some cases, a neural network accelerator may support one or more types of number formats for the network parameters. For example, hardware for implementing an ANN may support number formats wherein a set of values are represented by a $b$-bit mantissa for each value and a common exponent $exp$. To allow different sets of network parameters to be represented using different number formats, hardware for implementing an ANN may use a type of number format that has one or more configurable parameters (which may be referred to herein as quantisation parameters), wherein the parameters are shared between all values in a set. These types of number formats may be referred to herein as block-configurable types of number formats or setconfigurable types of number formats. Accordingly, non-configurable formats such as INT32 and floating point number formats are not block-configurable types of number formats. Example block-configurable types of number formats are described below.

One example block-configurable type of number format which may be used to represent the network parameters of an ANN is the Q-type format, which specifies a predetermined number of integer bits $a$ and fractional bits $b$. Accordingly, a number can be represented as $Qa.b$ which requires a total of $a + b + 1$ bits (including the sign bit). Example Q-type formats are illustrated in Table 1 below (excluding the sign bit). The quantisation parameters for the Q-type format are the number of integer bits $a$ and the number of fractional bits $b$.

**Table 1**

| Q Format | Description | Example |
|---|---|---|
| Q4.4 | 4 integer bits and 4 fractional bits | $0110.1110_2$ |
| Q0.8 | 0 integer bits and 8 fractional bits | $.01101110_2$ |

Another example block-configurable type of number format which may be used to represent network parameters of an ANN is one in which number formats of this type are defined by a fixed integer exponent $exp$ and a $b$-bit mantissa $m$ such that a value $u$ is equal to $u = 2^{exp}m$. In some cases, the mantissa $m$ may be represented in two's complement format. However, in other cases other signed or unsigned integer formats may be used. In these cases, the exponent $exp$ and the number of mantissa bits $b$ only need to be stored once for a set of values represented in that number format. Different number formats of this type may have different mantissa bit lengths $b$ and/or different exponents $exp$, thus the quantisation parameters for this type of number format comprise the mantissa bit length $b$ (which may also be referred to herein as a bit width, bit depth or bit length), and the exponent $exp$.

A final example block-configurable type of number format which may be used to represent the network parameters of an ANN is the 8-bit asymmetric fixed point (Q8A) type format. In one example, number formats of this type comprise a minimum representable number $r_{min}$, a maximum representable number $r_{max}$, a zero point $z$, and an 8-bit number $d_{Q8A}$ for each value in a set which identifies a linear interpolation factor between the minimum and maximum representable numbers. In other cases, a variant of this type of format may be used in which the number of bits used to store the interpolation factor $d_{QbA}$ is variable (e.g., the number of bits $b$ used to store the interpolation factor may be one of a plurality of possible integers). In this example the Q8A type format or a variant of the Q8A type format may approximate a floating point value $d_{float}$ as shown in equation (1) where $b$ is the number of bits used by the quantised representation (i.e., 8 for the Q8A format) and $z$ is the quantised zero point which will always map exactly back to 0. The quantisation parameters for this example type of number format comprise the maximum representable number or value $r_{max}$, the minimum representable number or value $r_{min}$, the quantised zero point $z$, and optionally, the mantissa bit length $b$ (i.e., when the bit length is not fixed at 8).

$$d_{float} = \frac{(r_{max} - r_{min})(d_{QbA} - z)}{2^b - 1} \qquad (1)$$

In another example the Q8A type format comprises a zero point z which will always map exactly to 0, a scale factor *scale* and an 8-bit number $d_{Q8A}$ for each value in the set. In this example a number format of this type approximates a floating point value $d_{float}$ as shown in equation (2). Similar to the first example Q8A type format, in other cases the number of bits for the integer or mantissa component may be variable. The quantisation parameters for this example type of number format comprise the zero point z, the scale *scale,* and optionally, the mantissa bit length b. In contrast to the other quantisation parameters described above which are integer values, the *scale* quantisation parameter is a floating point value. As described in more detail below with respect to FIG. 5, the statistics collection may be performed before or after the original values have been converted or quantised to a desired number format. Where the statistics collection is performed after quantisation the convergence of the quantisation parameters may be slow because the format selection is based on approximated (i.e., quantised) input data. This convergence problem may be exacerbated in these cases when trying to converge to a floating point value since there are a lot of possible values to search. Accordingly, to converge more rapidly in such cases, the *scale* may itself be quantised coarsely to reduce the number of possible values to search.

$$d_{float} = \left( d_{Q8A} - z \right) * scale \quad (2)$$

**Format Selection Algorithm**

A format selection algorithm is an algorithm that is used to select a number format for representing a set of values from a plurality of potential number formats. Where the plurality of potential number formats are number formats of a specific block-configurable type of number format, selecting a number format from the plurality of potential number formats may comprise selecting one or more quantisation parameters for the type of number format. For example, determining a number format of a block-configurable type of number format defined by a *b*-bit mantissa and an exponent *exp* may comprise identifying the bit width *b* of the mantissa and/or the value of the exponent *exp.* In the examples described herein it is assumed that the bit width for a block-configurable number format has been pre-determined and the methods herein are used to select any combination of the remaining quantisation parameters (e.g. *exp*).

One example format selection algorithm for selecting a number format for representing a set of network parameters of an ANN, which may be used in combination with the statistics collection hardware units described herein, is referred to as the full range algorithm or the minimum/maximum algorithm. The minimum/maximum algorithm selects a number format that will cover the entire range of the set of network parameters. For example, for a given mantissa bit depth *b*, the method may be used to select the smallest exponent *exp* that covers the range for the set of network parameters *x*. For example, for a given mantissa bit depth *b*, the exponent *exp* can be selected in accordance with equation (3) such that the number format covers the entire range of *x* where $\lceil \cdot \rceil$ is the ceiling function. It will be evident to a person of skill in the art that equation (3) is a simplified version of the minimum/maximum algorithm that ignores the fact that the upper bound, strictly speaking is $2^{exp+b-1}$ - 1 (i.e., the final (-1) is ignored). The addition of 1 in equation (3) accounts for the fact that the mantissa incorporates a sign bit, for example for 2s complement arithmetic.

$$exp = \lceil \log_2(\max(|x|)) \rceil - b + 1 \quad (3)$$

However, such a method is sensitive to outliers. Specifically, where the set of network parameters *x* has outliers, precision is sacrificed to cover the outliers. This may result in large quantisation errors (e.g., the error between the set of network parameters in a first number format (e.g., floating point number format) and the set of network parameters in the selected number format). As a consequence, the error in the output data of the layer and/or of the ANN caused by the quantisation, may be greater than if the number format covered a smaller range, but with more precision.

Another example format selection algorithm for selecting a number format for representing a set of network parameters of an ANN, which may be used in combination with the statistics collection hardware units described herein is referred to as the weighted outlier algorithm and is described in the Applicant's GB Patent Application No. 1718293.2, which is herein incorporated by reference in its entirety. In the weighted outlier algorithm the number format for a set of network parameters is selected from a plurality of potential number formats based on the weighted sum of the quantisation errors when a particular number format is used, wherein a constant weight is applied to the quantisation errors for network parameters that fall within the representable range of the number format and a linearly increasing weight is applied to the quantisation errors for the values that fall outside the representable range.

It will be evident to a person of skill in the art that these are only example format selection algorithms and any format selection algorithm which selects a fixed point number format for a set of values based on one or more statistics of the set of network parameters may be used with the statistics collection hardware units described herein.

In some cases, the format selection algorithm used to select a number format from statistics generated by a statistics collection hardware unit may be implemented or executed by the NNA. For example, the NNA may have dedicated hardware (e.g., a format selection hardware unit (e.g., fixed function circuitry)) to receive the statistics generated by the statistics collection hardware unit, and select a number format therefrom in accordance with a format selection algorithm. In some cases, the dedicated hardware may form part of the associated statistics collection hardware unit. Having dedicated hardware in the NNA that is configured to implement a format selection hardware may increase the speed at which a number format can be selected, but it may increase the complexity of the NNA.

In other cases, the format selection algorithm used to select a number format from statistics generated by a statistics collection hardware unit may be implemented or executed by a unit external to the NNA. For example, there may be a processor or dedicated hardware that is external, but connected, to the NNA that is configured to receive the statistics generated by the statistics collection hardware unit, and select a number format therefrom in accordance with a format selection algorithm. In another example, the host (e.g., host CPU) that controls the operation of the NNA may be configured to receive the statistics generated by a statistics collection hardware unit, and select a number format therefrom in accordance with a format selection algorithm. Where an external processor or a CPU executes the format selection algorithm the format selection algorithm may be implemented in software. One benefit of implementing the format selection algorithm in software rather than hardware is that it allows the format selection algorithm to be more easily changed if, for example, a better or more efficient format selection algorithm is developed or discovered.

**Relationship Between Statistics Collection Hardware Unit and Format Conversion Hardware Unit**

As described above, each statistics collection hardware unit generates statistics for a set of network parameters that are converted by the associated format conversion hardware unit, and the number format selected based on the statistics collected by a statistics collection hardware unit is used to control the conversion performed by that format conversion hardware unit for a current pass of the neural network or a subsequent pass of the neural network. In some cases, as shown in FIG. 3 and at 502 of FIG. 5 a statistics collection hardware unit 504 may be configured to collect or generate statistics on the set of network parameters before the network parameters have been converted to a desired number format by the associated format conversion hardware unit 506. In other words, in some cases the statistics collection hardware unit may collect statistics on a set of network parameters input to the associated format conversion hardware unit. However, in other cases, as shown at 508 of FIG. 5 a statistics collection hardware unit 510 may be configured to collect or generate statistics on the set of network parameters after they have been converted to a desired number format by the associated format conversion hardware unit 512. In other words, in some cases, the statistics collection hardware unit may collect statistics on a set of network parameters output from the associated format conversion hardware unit. If an NNA has more than one statistics collection hardware unit, then one or more of the statistics collection hardware units may collect statistics on a set of network parameters prior to format conversion by the respective associated format conversion hardware unit(s), and one or more of the statistics collection hardware units may collect one or more statistics on a set of network parameters after format conversion by the respective associated format conversion hardware unit(s).

Since it may take multiple passes in the same direction (e.g. multiple forward passes or multiple backward passes) to settle upon a suitable number format for a set of network parameters due to factors such as changes in number formats in earlier layers causing knock-on effects later in the network, it is preferable to use a format selection method that converges and is stable after convergence. A stable, convergent method will also be able to track changes in the input after convergence. As shown in FIG. 5 collecting statistics prior to format conversion results in a fully feed forward graph and collecting statistics post format conversion results in feedback. Testing shows that, particularly when a simple format selection algorithm, such as the minimum/maximum format selection algorithm is used, selecting a format from statistics collected from a set of network parameters prior to format conversion produces more stable results and converges faster than selecting a format from statistics collected from the set of network parameters after format conversion.

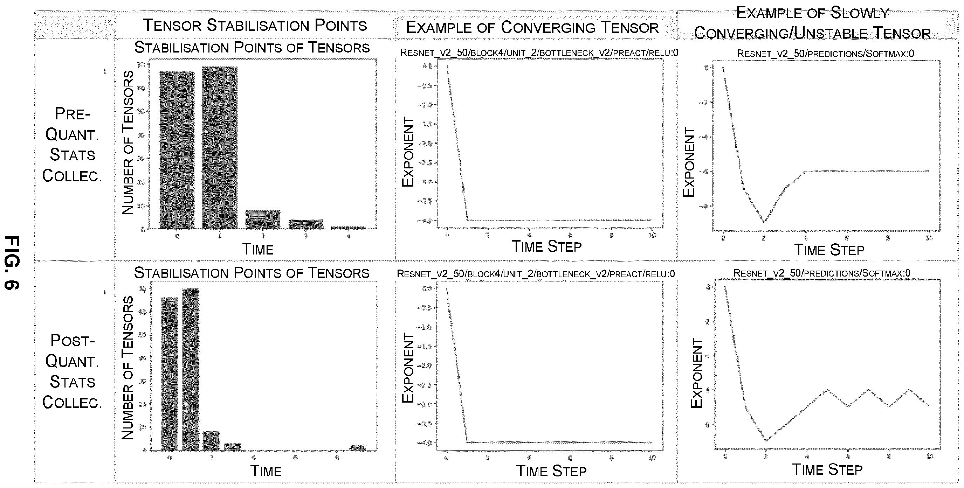

For example, FIG. 6 shows, on the left, plots of tensor stability points for the ResNet v2 network with 5 format selection images, with statistics collected before and after format conversion using the minimum/maximum method. The stability point indicates the number of iterations for the format to converge. For example, a stability point of 0 indicates that the format was stable after one iteration, and a stability point of 1 indicates it took 2 iterations to stabilize. It can be seen that, when the statistics were collected before format conversion, the formats of the neural network were in a steady state after 5 iterations, whereas when the statistics were collected after format conversion, the formats were not all stable even after 10 iterations. FIG. 6 also shows, in the middle, plots of the exponent selected each iteration in accordance with the minimum/maximum method with statistics collected before and after format conversion for the tensor output from a layer, early in the network, that implements a ReLU function. It can be seen that the format (e.g. exponent) for this layer converges whether the statistics are collected before or after format conversion. FIG. 6 also shows, on the right, plots of the exponent selected each iteration in accordance with the minimum/maximum method with statistics collected before and after conversion for the tensor output from a layer, later in the network, that implements a SoftMax function. It can be seen that the format (e.g. exponent) for this tensor does not correctly converge when the statistics are collected after format conversion; rather, it oscillates between two values. This undesired property is called metastability.

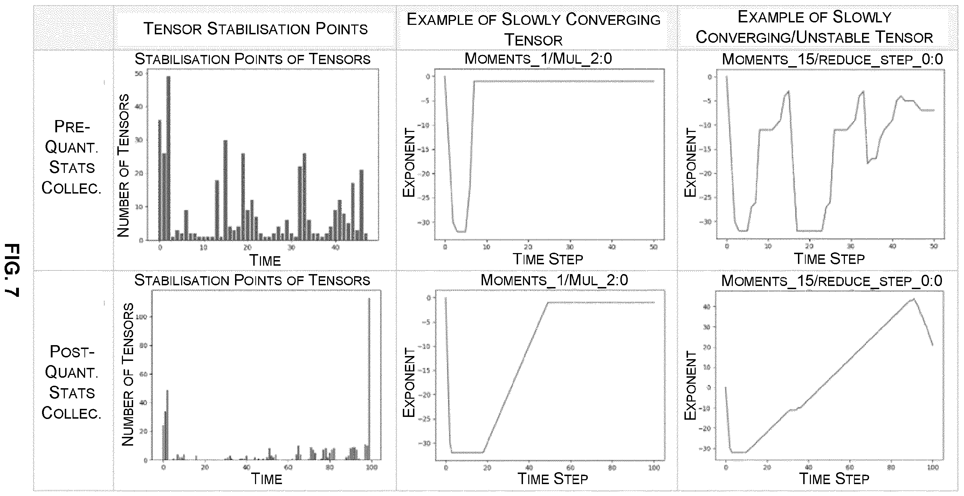

FIG. 7 shows, on the left, plots of tensor stability points for a style transfer network, with statistics collected before and after format conversion using the minimum/maximum method. This network's architecture is deeper and more complex than the first example. It can be seen that, when the statistics were collected before format conversion, the formats were in a steady state after 50 iterations, although there was quite a range of convergence points over the layers of the network. In contrast, it can be seen that, when the statistics were collected after format conversions, the formats of the network were not stable even after 100 iterations. FIG. 7 also shows, in the middle, plots of the exponent selected each iteration in accordance with the minimum/maximum method with statistics collected before and after format conversion for the tensor output from a layer that implements a multiply function. It can be seen that the format (e.g. exponent) for this layer converges whether the statistics are collected before or after format conversion, although it takes significantly longer for the format to converge when the statistics are collected after format conversion. FIG. 7 also shows, on the right, plots of the exponent selected each iteration in accordance with the minimum/maximum method with statistics collected before and after conversion for the tensor output from a layer that implements a reduce step function. It can be seen that the format (e.g. exponent) takes a long time to converge when the statistics are collected prior to format conversion, and does not converge (after 100 iterations) when the statistics are collected after format conversion. So, in the example, collecting statistics after format conversion results in slow convergence and instability.

In some cases, where the format selection method is the minimum/maximum method, some of the stability problems (e.g. non-convergence and metastability) that occur when selecting a format from statistics collected from the set of network parameters after format conversion may be addressed by capping the minimum value before the log at $2^{\text{prevexp}}$ where prevexp is the current exponent such that the format selection algorithm that is implemented is expressed in equation (4). However, testing has shown that this may still converge more slowly than a selecting a format from statistics collected from a set of network parameters prior to format conversion and/or may be at risk of metastability. In other cases, some of the stability problems that occur when selecting a format from statistics collected from the set of network parameters after format conversion may be addressed by using a more complex format selection algorithm.

$$exp = \lceil \log_2(\max(\max(|x|), 2^{\text{prevexp}})) \rceil - b + 1 \qquad (4)$$

**Statistics Collection Hardware Unit**

As described above, the statistics that are collected or generated by a statistics collection hardware unit may be chosen to correspond to the format selection algorithm that is used. For example, if the minimum/maximum algorithm is used to select a number format, then the statistics collection hardware unit may be configured to collect or generate the maximum absolute value of a set of network parameters. In another example, if the weighted outlier algorithm is used to select a number format, then the statistics collection hardware unit may be configured to generate a histogram of the set of values (e.g. with roughly 1000 entries). The component implementing the format selection may then generate quantisation errors for each range in the histogram for each of a plurality of number formats, and select one of those formats in accordance with the weighted outlier method. It will be evident that these are example statistics that may be collected by a statistics collection hardware unit and that other statistics may be collected or generated by a statistics collection hardware unit.

Reference is now made to FIG. 8 which illustrates an example statistics collection hardware unit 800 for use with the minimum/maximum format selection algorithm. Specifically, the example statistics collection hardware unit 800 is configured to collect or generate the maximum absolute value from a set of network parameters. The example statistics collection hardware unit comprises an absolute value module 802, a maximum module 804, and a register 806. The absolute value module 802 is configured to receive a value (e.g., a network parameter) and output the absolute value thereof. The maximum module 804 is configured to select the maximum of the output of the absolute value module 802 and the value stored in the register 806. The register 806 is configured to store the output of the maximum module 804. It will be evident to a person of skill in the art that the network parameters are streamed over time into the absolute value module 802 and for each network parameter the register will be clocked and updated. Accordingly, the example statistics collection hardware unit 800 is configured to determine and output the maximum absolute value of a set of network parameters streamed over time.

In the example shown in FIG. 8 the statistics collection hardware unit 800 is configured to receive one network parameter at a time, however, in other cases the statistics collection hardware unit may be configured to receive multiple (N) network parameters at a time (e.g., an N-element vector of network parameters). In such cases, the statistics collection hardware unit may comprise N absolute values modules, or a vectorised absolute value module that can output the absolute value of N inputs; and the maximum module may be configured to receive and compare N +1 inputs (that is, the N outputs of the vectorised absolute value module and the value stored in the register).

Preferably the absolute value module, maximum module and register operate in the same number format as the received network parameters (i.e., no format conversion). Where the bit width or bit length of the network parameters is variable then preferably the absolute value module, maximum module, and register are capable of supporting the maximum possible bit width or bit length. Where the set of networks may be in any of a plurality of types of number formats, preferably the statistics collection unit is able to process network parameters in any of the types of number format. For example, in some cases, the input buffer may be able to receive input data in either a floating point number format or a fixed point number format. In these cases, it would be preferable for a statistics collection unit that is configured to collect statistics on the input data to the input buffer to be able to accept and process network parameters in either type of number format.

As described above, in some cases, the format selection algorithm may be implemented by hardware in the NNA. In such cases, the NNA may comprise dedicated hardware that implements the format selection algorithm. The dedicated hardware that implements the format selection algorithm may be separate from or form part of the associated statistics collection hardware unit. For example, to implement the minimum/maximum format selection algorithm which selects the exponent for a fixed number of bits, the statistics collection hardware unit may comprise a log base 2 module 808 which is configured to receive a value (e.g. the maximum absolute value output by the maximum module 804) and output the log base 2 value thereof, a ceiling module 810 which is configured to receive a value (e.g. the output of the log base 2 module) and output the ceiling thereof, a subtraction module 812 which is configured to receive a value and subtract an integer (e.g. n+1) therefrom. It can be seen that together the log base 2 module 808, the ceiling module 810 and the subtraction module 812 implement the minimum/maximum format selection algorithm as set forth in equation (3) above. Even when the statistics collection part of the hardware unit can receive and process multiple network parameters at the same time, the format selection part of the hardware unit (log base 2 module and the ceiling module) still only has to process one input at time since there will only be one absolute value for all of the network parameters.

**Enabling and Disabling Statistics Collection and Format Selection**

In some cases, it may be possible to dynamically enable and disable the statistics collection and/or format selection. For example, instead of running the statistics collection and format selection at a selected granularity for each pass of the neural network indefinitely, the statistics collection and/or format selection may be dynamically enabled and disabled when certain conditions are met. In some cases, the statistics collection and/or format selection may be periodically enabled at fixed intervals (e.g., every few hundred pass in a single direction (e.g. every few hundred forward passes)). In some cases, to initialise a neural network, a single input set may be fed through the neural network multiple times (e.g. a few times to 100 times or more depending on the depth of the neural network and the configuration of the format selection relative to the stats collection (e.g. whether the statistic collection is before or after format conversion)) until the number formats converge. Once the number formats have converged the statistics collection and/or format selection may be disabled (e.g. to prevent the corresponding hardware unit from consuming power). In some cases, statistics collection and/or format selection may be initially enabled for a predetermined number of passes of the neural network, after which the statistics collection and/or format selection may be disabled such that the number formats are frozen from this point onwards. In some cases, the information indicating whether the statistics collection and/or format selection is to be enabled or disabled in a hardware pass may be included in the information that the neural network accelerator receives for each hardware pass.

**Format Conversion Hardware Unit**

As described above, each format conversion hardware unit is configured to receive information identifying a desired number format; receive network parameters in a number format; and convert the received network parameters to the desired number format. The format conversion that is performed, and how it is performed, is based on the type of number format of the received network parameters and the type of the desired number format. For example, a format conversion hardware unit may receive network parameters in a floating point number format and convert the received network parameters to a fixed point number format; a format conversion hardware unit may receive network parameters in a fixed point number format and convert the received network parameters to another fixed point number format; a format conversion module may receive network parameters in a fixed point number format and convert the received network parameters to a floating point number format. The conversion from one number format to another may be performed in any suitable manner.

Where the format of the received network parameters is parametrised the format conversion hardware unit may also receive information indicating or identifying the number format of the received network parameters. For example, where the received network parameters are in a block-configurable type of number format, the format conversion hardware unit may receive information identifying the values of one or more of the configurable quantisation parameters (e.g., where the received network parameters are in a type of number format identified by a bit width and an exponent, a format conversion hardware module may receive information identifying the exponent).

The manner in which a format conversion is implemented depends on the input and the desired number format. Methods of converting from one number format to another are known to those of skill in the art. For example, where the received network parameters are in a number format that is defined by a mantissa bit width and an exponent (as described above) and the format conversion hardware unit is configured to convert the received network parameters to a different exponent, the format conversion unit may be configured to implement the format conversion via an arithmetic bit shift of the mantissas of the received network parameters by the difference between the initial exponent and the desired exponent.

## Network Processing Hardware Units

Each of the network processing hardware units of FIG. 3 will now be described. As described above, the example NNA 300 of FIG. 3 comprises a convolution processing unit 302, an activation processing unit 304, an element-wise operations processing unit 306, a normalisation processing unit 308, a configurable pooling processing unit 310, an interleave processing unit 312, and two tensel rescale processing units 314, 316. It will be evident to a person of skill in the art that this is just an example set of network processing hardware units and that other NNAs may have additional network processing hardware units, fewer network processing hardware units and/or different network processing hardware units.

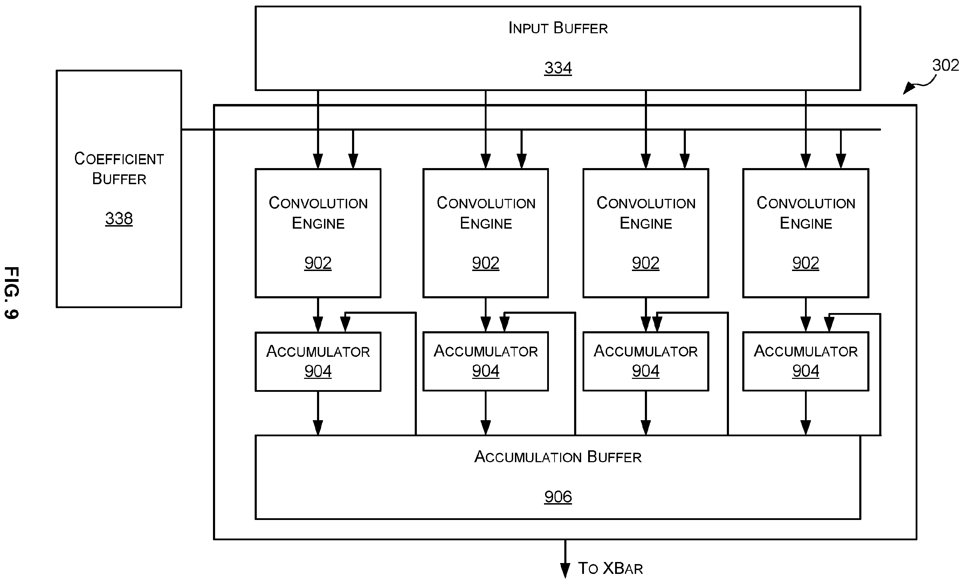

The convolution processing unit 302 is hardware configured to accelerate the processing of convolution operations. The convolution processing unit 302 is configured to receive input data and weights and perform convolution operations between the input data and weights and output the results of the convolution operations. As shown in FIG. 9, the convolution processing unit 302 may comprise one or more convolution engines 902 which are configured to receive a set of weights $\{k_1, k_2 ..., k_8\}$ that represent all or a portion of a filter, and a set of input data values $\{x_1, x_2, .. , x_8\}$ that represent all or a portion of a window of the input data, and perform multiplication and addition calculations on the received weights and input data values.

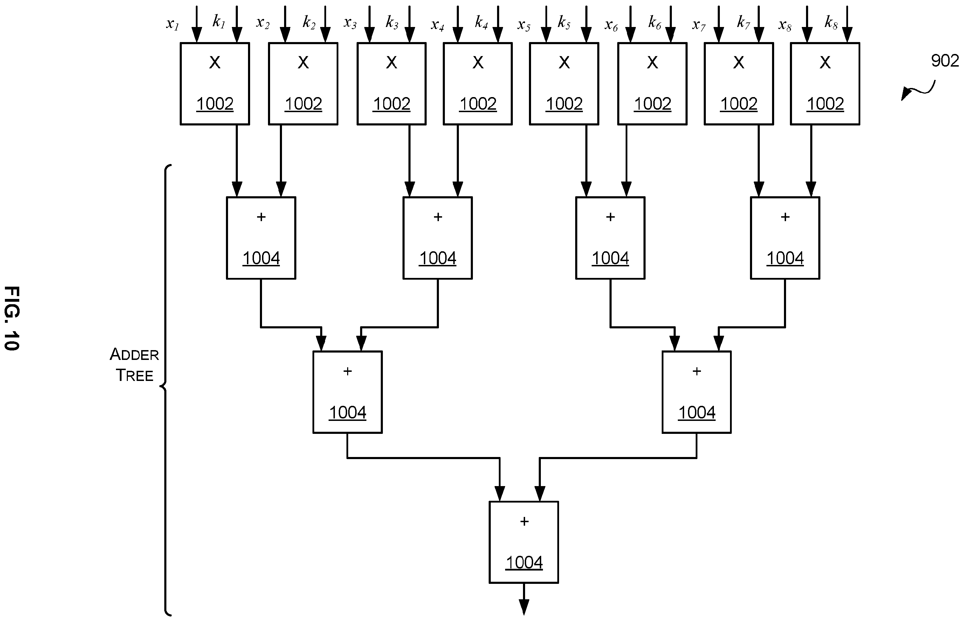

In some examples, as shown in FIG. 10, each convolution engine 902 may comprise a plurality of multipliers 1002, each of which is configured to multiple a weight ($k_i$) and a corresponding input data value ($x_i$) to produce a multiplication output value. The multipliers 1002 are followed by a plurality of adders 1004 which calculate the sum of the multiplication outputs. As shown in FIG. 10 the adders 1004 may form an adder tree. In the example of FIG. 10 the convolution engine 902 comprises eight multipliers 1002, but in other examples there may be more or fewer multipliers. For example, in some cases there may be 128 multipliers. Generally, if there are Z multipliers an adder tree comprises Z-1 adders. The multipliers 1002 and/or adders 1004 may be implemented by fixed-function circuitry.

Since it may take more than one hardware pass of the convolution engine(s) 902 to generate a complete output value/tensel (e.g., because a convolution engine may only receive and process a portion of the weights of a filter and/or a portion of the input data values of a window in a cycle), the convolution processing unit 302 may comprise an accumulator 904 for each convolution engine 902. A hardware pass of the convolution engine(s) 902 comprises receiving a set of weights and a set of input data values and performing a multiply-accumulate operation thereon.

Each accumulator 904 receives the output of one convolution engine 902 and adds the output to a previous convolution engine output that relates to the same filter. Since a convolution engine 902 may not generate or produce outputs that relate to the same filter in consecutive cycles, the partial results of one or more filters may be stored in an accumulation buffer 906 and then the appropriate partial results may be provided to the accumulator(s) 904 each cycle by the accumulation buffer 906.

As described above, the weights (and optionally biases) used by the convolution processing unit 302 may be stored in a coefficient buffer 338.

The activation processing unit 304 is hardware configured to receive input data and apply a non-linear function (which may also be referred to as an activation function) thereto. Example, non-linear functions which may be implemented (or approximated) by the activation processing unit 304 include, but are not limited to, a Tanh function, a sigmoid function, a Rectified Linear Unit (ReLU) function or a leaky ReLU (LReLU) function. In a ReLU function, the output element $y_{i,j,k}$ is calculated by identifying a maximum value as set out in equation (5) wherein for $x$ values less than 0, $y = 0$. A LReLU function outputs the input if it is greater than zero, and outputs a fraction (e.g., 0.01) of the input when it is negative. An example implementation of a LReLU function is set out in equation (6).

$$y_{i,j,k} = \max\left(0, x_{i,j,k}\right) \qquad (5)$$

$$y_{i,j,k} = \max\left(0.01 * x_{i,j,k}, x_{i,j,k}\right) \qquad (6)$$

In some cases, the activation function that is performed by the activation processing unit 304 may be configurable. For example, in some cases, the activation processing unit 304 may receive information that identifies one activation function of a plurality of activation functions that is to be applied to the input data.

In some cases, the activation processing unit 304 may be configurable such that it can evaluate and/or approximate a large class of activation functions. For example, it may configured to store, in entries of a lookup table, data representing the activation function to be implemented. In these cases, the activation processing unit 304 may be configured to use the input data to lookup one or more entries in the lookup table and generate the output of the activation function based on the one or more entries in the lookup table and/or the input data. For example, the activation processing unit 304 may be configured to calculate the output of the activation function by interpolating between two or more entries read from the lookup table. An example implementation of an activation processing unit 304 is described in the Applicant's GB Patent No. 2552242, which is herein incorporated by reference in its entirety.

The element-wise operations processing unit 306 is hardware configured to receive input data (e.g., an input tensor) and perform an element-wise operation on the input data (e.g., input tensor), optionally with another set of data (e.g., another tensor) received via a secondary data receiver (Rx) 344 which may be obtained or retrieved from external memory. An element-wise operation is a same operation that is performed on each element of the input data/tensor (e.g., each input data value or each tensel). Element-wise operations which may be performed on the input data include, but are not limited to, add, multiply, maximum, and minimum.

The other data set/tensor may be the same size (e.g., have the same dimensions) as the input data/tensor such that corresponding elements of the two tensors are combined using an element-wise operation. Alternatively, the other data set/tensor and the input data/tensor may have different sizes or dimensions. If, for example, the mismatching dimension of one of the tensors is of size 1, an element-wise operation may be performed between the input data/tensor and the other data set/tensor using a broadcast technique wherein the smaller tensor is broadcast (or expanded) to the size of the other tensor. For example, a tensor of size $[N, H, W, C_{in}] = [1, 10, 1, 10]$ (where $N$ is the number of batches) can be combined elementwise with a tensor of size $[N, H, W, G_{in}] = [1, 10, 10, 10]$ by expanding the $W$ dimension of the first tensor.

The normalisation processing unit 308 is hardware configured to receive input data and apply a normalisation function to the received input data to produce normalised data. Example normalisation functions which may be implemented by the normalisation processing unit 308 include, but are not limited to, a Local Response Normalisation (LRN) function and a Local Contrast Normalisation (LCN) function. In some cases, the normalisation function which is applied to the input data may be configurable. For example, the normalisation processing unit 308 may receive information indicating which of a plurality of normalisation functions is to be applied to the input data. This allows different normalisation functions to be applied to different input data. An example implementation of a normalisation processing unit 308 is described in the Applicant's GB Patent No. 2552242, which is herein incorporated by reference in its entirety.

The configurable pooling processing unit 310 is hardware which can be dynamically configured to perform a pooling operation or a depth-wise convolution operation. The configurable pooling processing unit 310 is configured to receive an input tensor and configuration information identifying the operation to be performed on the input tensor, and perform the identified operation on the input tensor to generate an output tensor. The identified operation is one of a plurality of selectable operations. The plurality of selectable operations comprises at least one pooling operation and a depth-wise convolution operation. A pooling operation is an operation that reduces the size of the data by summarizing blocks or subsets of data in the same channel. Example pooling operations include a maximum operation, a minimum operation, and an average operation. In a neural network, the purpose of a pooling operation is to reduce the spatial size of the representation to reduce the number of parameters and computations in the neural network, and hence also to control overfitting. Since both pooling operations and depth-wise convolution operations involve performing a mathematical operation on windows or blocks or subsets of tensels in a channel of the input tensor, hardware that is efficient at processing windows of channels of an input tensor can be used to implement both pooling operations and depth-wise convolution operations efficiently.

In some cases, a configurable pooling processing unit 310 may comprise a plurality of pool engines. Each pool engine is configured to receive a channel of the input tensor and configuration information indicating which of a plurality of different channel outputs are to be generated, and generate the identified channel output from the received channel of the input tensor.

The interleave processing unit 312 is hardware configured to receive input data and perform a rearrangement operation to produce data that is in a particular order. The rearrangement may comprise sorting and/or transposing the received input data.

As shown in FIG. 3, the configurable pooling processing unit 310 and the interleave processing unit 312 may each have access to a shared buffer 346 which can be used by these units to write data to and retrieve data from. For example, the shared buffer 346 may be used by these units to rearrange the order of received data or the generated data. For example, the configurable pooling processing unit 310 and/or the interleave processing unit 312 may be configured to write data to the shared buffer 346 and then read the same data out in a different order. In some cases, each of the configurable pooling processing unit 310 and the interleave processing unit 312 may be allotted a portion of the shared buffer 346 which only that unit can access. In these cases, the configurable pooling processing unit 310 and the interleave processing unit 312 may only be able to read data out of the shared buffer 346 that they have written to it.

**Method**

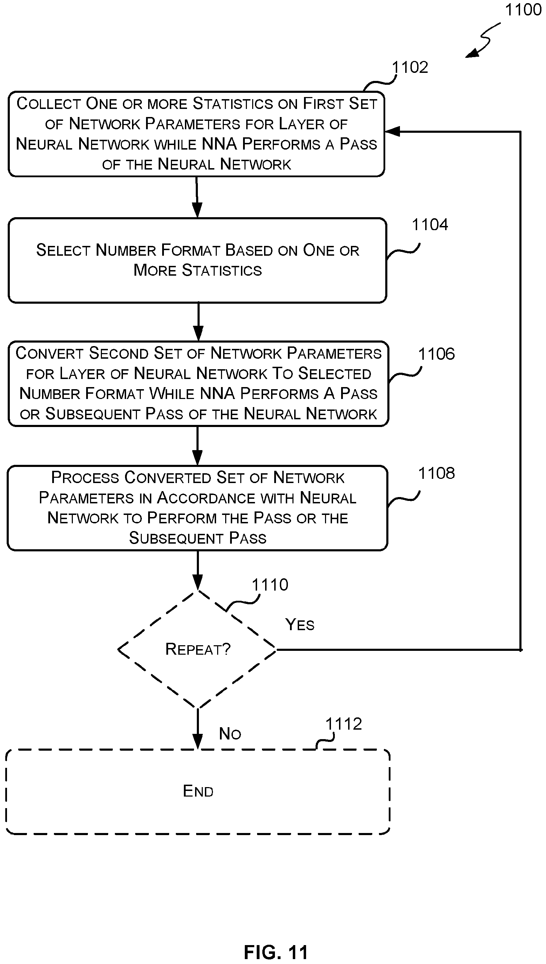

Reference is now made to FIG. 11 which is a flow chart of an example method 1100 of performing online number format selection for network parameters of a neural network, which may be implemented by a system with an NNA, such as, but not limited to, the NNA 300 of FIG. 3, with one or more network processing hardware units, one or more statistics collection hardware units and one or more format conversion hardware units.

The method 1100 begins at block 1102 where one or more statistics on a first set of network parameters for a layer of the neural network are collected, using a statistics collection hardware unit of the NNA, while the NNA is performing a pass (e.g. forward pass or backward pass) of the neural network. In other words, the statistics are collected on a set of network parameters as they flow through the NNA during a pass of the neural network.

As described above, the statistics collection may be performed at any suitable granularity. For example, the first set of network parameters for a layer of the neural network may comprise (i) all of the network parameters of a particular type (e.g. all of the input data values or all of the weights) for the layer; (ii) all of the network parameters of a particular type in a hardware pass of the NNA that relate to the layer of the neural network; or (iii) all of the network parameters of a particular type in a subset of the network parameters in a hardware pass of the NNA that relate to the layer of the neural network. If the set of network parameters comprises all of the network parameters of a particular type for the layer and that layer belongs to a layer group that is divided into a plurality of hardware passes, then the statistics collection unit may be configured to collect the statistics over the plurality of hardware passes. Once the one or more statistics have been collected the method 1100 proceeds to block 1104.

At block 1104, a number format is selected based on the one or more statistics collected in block 1102. The number format may be selected from the one or more statistics in accordance with a format selection algorithm. Example format selection algorithms were described above. The one or more statistics that are collected in block 1102 may be chosen to correspond to the format selection algorithm that is used to select the number format. For example, where the format selection algorithm uses the maximum absolute value to select a number format, then the statistics collection unit may collect or generate the maximum absolute value of the set of network parameters. As described above, the number format selection may be performed by the NNA (e.g., by a dedicated hardware unit (e.g., fixed function circuitry) within the NNA), or a unit external to the NNA (e.g., by a dedicated hardware unit (e.g., fixed function circuitry), an external processor or a CPU that controls the operation of the NNA). Once a number format has been selected based on the one or more statistics collected in block 1102, then the method proceeds to block 1106.

At block 1106, a second set of network parameters are converted, using a format conversion hardware unit of the NNA, to the number format selected in block 1104. The second set of network parameters is related to the first set of network parameters (i.e., the set of network parameters from which the one or more statistics are generated). In particular, as described above, the second set of network parameters is related to the same layer of the neural network, but may relate to the same pass of the neural network or a different pass of the neural network. For example, the second set of the network parameters may: (i) be the first set of network parameters such that the selected format is applied to the set of network parameters from which the one or more statistics were generated; (ii) comprise another set of network parameters from the first set of network parameters but that relate to the same layer and the same pass of the neural network (e.g. if the first set of network parameters is a subset of network parameters in a hardware pass, the second set may comprise a subsequent subset in the same hardware pass, and/or the network parameters in one or more subsequent hardware passes that relate to the same layer; if the first set of network parameters comprises the network parameters in a hardware pass, the second set of network parameters may comprise the network parameter in one or more subsequent hardware passes); (iii) comprise both the first set of network parameters and a different set of network parameters related to the same layer and the same pass of the neural network; (iv) be a set of network parameters for a subsequent pass of the neural network that correspond to the first set of network parameters; (v) comprise another set of network parameters from the first set of network parameters but that relate to the same layer for a subsequent pass of the neural network; (vi) comprises both a set of network parameters for subsequent pass of the neural network that correspond to the first set of network parameters and comprise another set of network from the first set of network parameter but that relate to the same layer for a subsequent pass of the neural network. As described above, (i), (ii) and (iii) may only be suitable if the statistics are collected for a subset of a hardware pass or for a hardware pass. Once the format conversion has been performed the method proceeds to block 1108.

At block 1108, the converted second set of network parameters are processed using one or more network processing hardware units of the neural network accelerator in accordance with the neural network to perform the pass or to perform a subsequent pass of the neural network. For example, if the second set of network parameters are the input to the element-wise operations processing unit then the element-wise operations processing unit may perform an element-wise operation on the converted second set of network parameters in accordance with the layer of the neural network. Once the converted set of network parameters have been processed the method 1100 may end or the method 1100 may proceed to block 1110.

At block 1110, a determination may be made as to whether the statistics collection, format selection, and format application should be repeated. In some cases, it may be determined that the statistics collection, format selection and format application is not to be repeated if one or more conditions are met. The one or more conditions may comprise one or more of: a predetermined number of passes of the neural network in a single direction have been performed; and the number format has converged (e.g., the number format has not changed more than a predetermined amount over a predetermined number of iterations of the method). If it is determined that the statistics collection, format selection and format application should be repeated then the method proceeds back to block 1102. If, however, it is determined that the statistics collection, format selection and format application should not be repeated then the method 1100 may end 1112.

As described above with respect to FIG. 5, where the statistics collection hardware unit and the associated format conversion hardware unit operate on the same network parameters, in some cases the statistics collection hardware unit may be configured or situated so as to collect statistics on the set of network parameters prior to the format conversion hardware unit converting the set of network parameters to a desired number format, and other cases the statistics collection hardware unit may be configured or situated so as to collect statistics on the set of network parameters after the format conversion unit has converted the set of network parameters to the desired number format. However, where the statistics collection hardware unit collects statistics on the set of network parameters post format conversion, the number format selected based on the collected statistic will not be applied to the set of network parameters from which the statistics have been generated.

**Results**

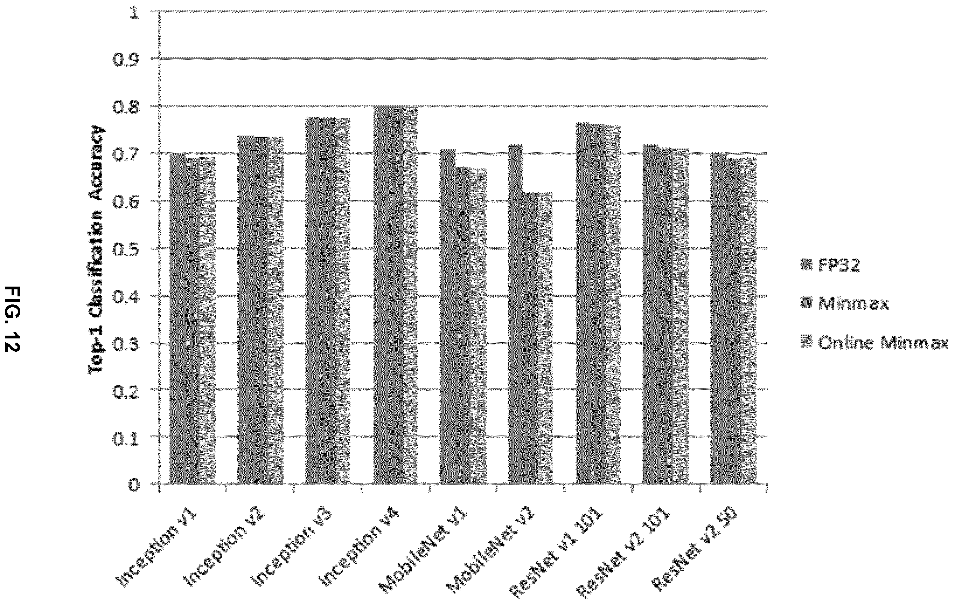

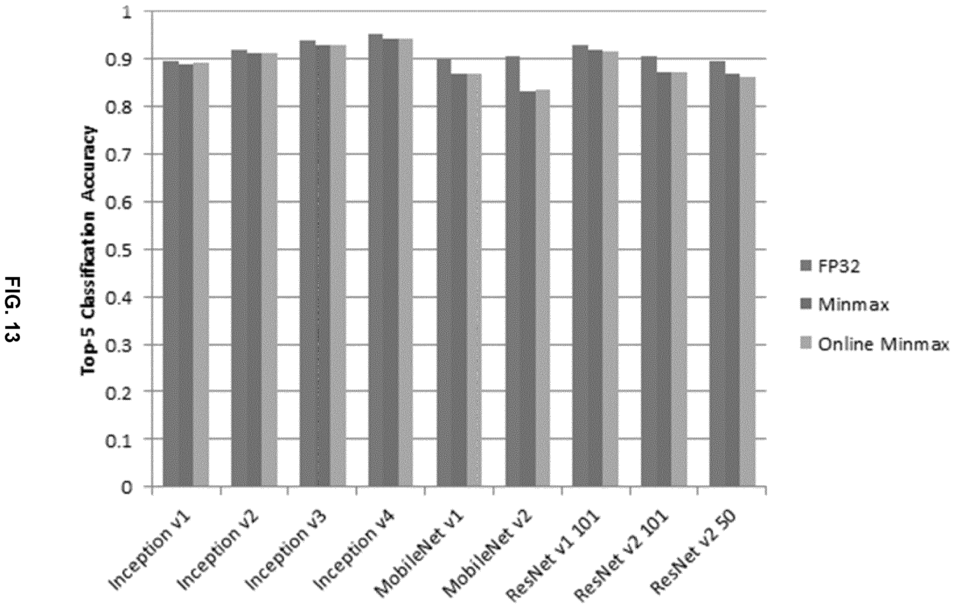

Testing has shown that a classification neural network which uses network parameter formats selected in the online manner described herein (i.e., by collecting one or more statistics on a set of network parameters using a statistics collection hardware unit of an NNA while the NNA is performing a pass of the neural network, selecting a number format based on the collected one or more statistics, and converting a second set of network parameters (related to the first set of network parameters) to the select number format) has a similar classification accuracy as when the network parameter number formats are selected offline (i.e., in advance). For example, FIGS. 12 and 13 illustrate the Top-1 and Top-5 classification accuracies for a number of different classification neural networks when the network parameters are represented using (a) a 32-bit floating point number format (identified as "FP32" in FIGS. 12 and 13); (b) number formats selected offline using training data in accordance with the minimum/maximum selection algorithm (identified as "Minmax" in FIGS. 12 and 13); and (c) number formats selected online in accordance with the methods and NNAs described herein (identified as "Online Minmax" in FIGS. 12 and 13). It can be seen in FIGS. 12 and 13 that the classification accuracy for (b) and (c) are quite similar. Accordingly, using the methods and NNAs described herein to perform online number format selection allows similar performance as selecting number formats offline, with the additional benefits of (i) not having to select the formats offline or in advance; and (ii) being able to adapt to changes in the input data. As is known to those of skill in the art, the Top-N classification accuracy is a measure of how often the correct classification is in the top N classifications output by a classification neural network.

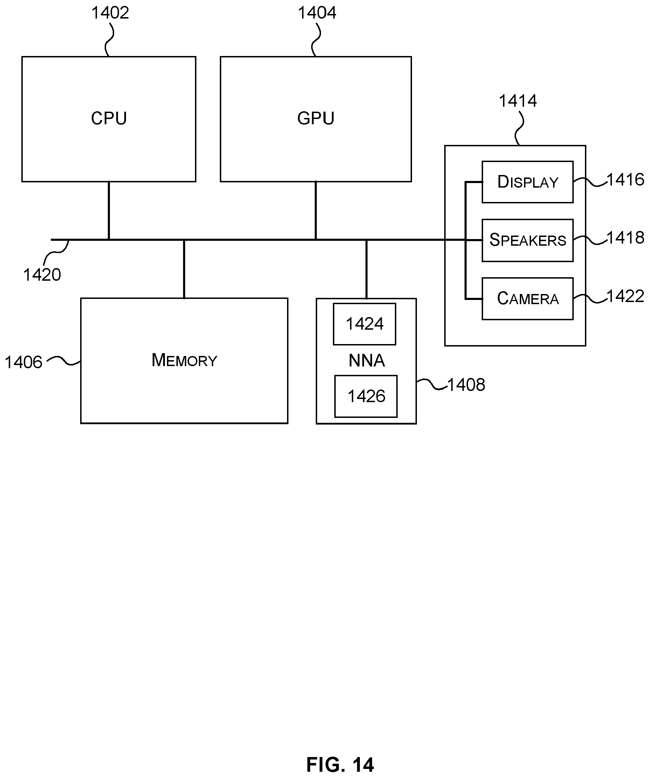

FIG. 14 shows an example computer system in which the neural network accelerators described herein may be implemented. The computer system comprises a CPU 1402, a GPU 1404, a memory 1406, a neural network accelerator (NNA) 1408 (which may be any of the neural network accelerators described herein, such as, but not limited to the NNA 300 of FIG. 3) and other devices 1414, such as a display 1416, speakers 1418 and a camera 1422. A statistics collection hardware unit 1424 and a format conversion hardware unit 1426 as described herein are implemented on the NNA 1408. The components of the computer system can communicate with each other via a communications bus 1420.

The neural network accelerators, statistics collection hardware units, convolution processing units and convolution engines of FIGS. 3, 8, 9 and 10 are shown as comprising a number of functional blocks. This is schematic only and is not intended to define a strict division between different logic elements of such entities. Each functional block may be provided in any suitable manner. It is to be understood that intermediate values described herein as being formed by a neural network accelerator, statistics collection hardware unit, convolution processing unit or convolution engine need not be physically generated by the neural network accelerator, statistics collection hardware unit, convolution processing unit or convolution engine at any point and may merely represent logical values which conveniently describe the processing performed by the neural network accelerator, statistics collection hardware unit, convolution processing unit or convolution engine between its input and output.

The neural network accelerators, statistics collection hardware units, convolution processing units and convolution engines described herein may be embodied in hardware on an integrated circuit. The neural network accelerators described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an applicationspecific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e., run) in an integrated circuit manufacturing system configures the system to manufacture a neural network accelerator configured to perform any of the methods described herein, or to manufacture a neural network accelerator comprising any apparatus described herein. An integrated circuit definition dataset may be, for example, an integrated circuit description.

Therefore, there may be provided a method of manufacturing, at an integrated circuit manufacturing system, a neural network accelerator as described herein. Furthermore, there may be provided an integrated circuit definition dataset that, when processed in an integrated circuit manufacturing system, causes the method of manufacturing a neural network accelerator to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g., providing commands, variables etc.) may be required in order for a computer system configured for generating a manufacturing definition of an integrated circuit to execute code defining an integrated circuit so as to generate the manufacturing definition of that integrated circuit.

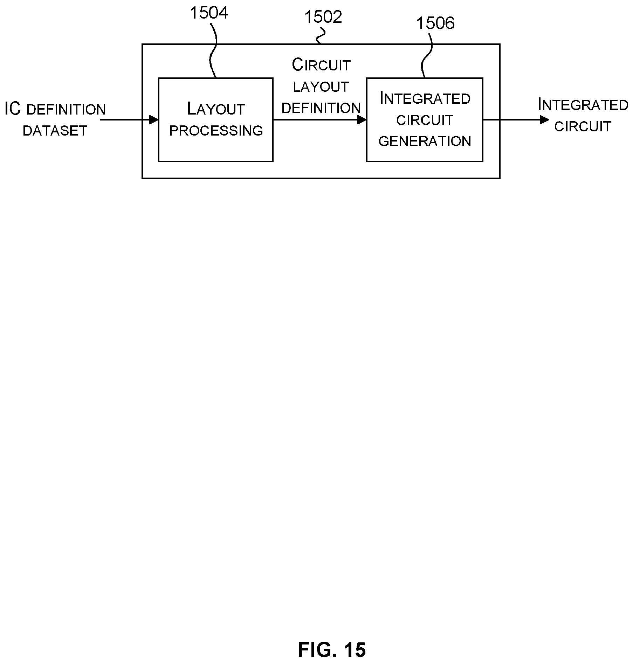

An example of processing an integrated circuit definition dataset at an integrated circuit manufacturing system so as to configure the system to manufacture a neural network accelerator will now be described with respect to FIG. 15.

FIG. 15 shows an example of an integrated circuit (IC) manufacturing system 1502 which is configured to manufacture a neural network accelerator as described in any of the examples herein. In particular, the IC manufacturing system 1502 comprises a layout processing system 1504 and an integrated circuit generation system 1506. The IC manufacturing system 1502 is configured to receive an IC definition dataset (e.g., defining a neural network accelerator as described in any of the examples herein), process the IC definition dataset, and generate an IC according to the IC definition dataset (e.g., which embodies a neural network accelerator as described in any of the examples herein). The processing of the IC definition dataset configures the IC manufacturing system 1502 to manufacture an integrated circuit embodying a neural network accelerator as described in any of the examples herein.

The layout processing system 1504 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g., NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1504 has determined the circuit layout it may output a circuit layout definition to the IC generation system 1506. A circuit layout definition may be, for example, a circuit layout description.

The IC generation system 1506 generates an IC according to the circuit layout definition, as is known in the art. For example, the IC generation system 1506 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1506 may be in the form of computer-readable code which the IC generation system 1506 can use to form a suitable mask for use in generating an IC.

The different processes performed by the IC manufacturing system 1502 may be implemented all in one location, e.g., by one party. Alternatively, the IC manufacturing system 1502 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a neural network accelerator without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 15 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 15, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method (1100) of dynamically selecting a number format for a set of network parameters of a neural network, the method (1100) comprising:

   collecting (1102), using a statistics collection hardware unit of a neural network accelerator, one or more statistics on a first set of network parameters for a layer of the neural network while the neural network accelerator is performing a pass of the neural network;
   selecting (1104) a number format based on the collected one or more statistics;
   converting (1106), using a format conversion hardware unit of the neural network accelerator, a second set of network parameters to the selected number format, the second set of network parameters comprising (i) the first set of network parameters and/or another set of network parameters for the layer, or (ii) a set of network parameters for a subsequent pass of the neural network corresponding to the first set of network parameters; and
   processing (1108), using one or more network processing hardware units of the neural network accelerator, the converted second set of network parameters in accordance with the neural network to perform the pass of the neural network or to perform the subsequent pass of the neural network.

2. A neural network accelerator (300) comprising:

   at least one network processing hardware unit (302, 304, 306, 308, 310, 312, 314, 316) configured to receive network parameters for layers of a neural network and perform one or more neural network operations on the received network parameters in accordance with the neural network;
   a statistics collection hardware unit (318, 320, 322, 324) configured to collect one or more statistics on a first set of network parameters for a layer while the neural network accelerator is performing a pass of the neural network; and
   a format conversion hardware unit (326, 328, 330, 332) configured to convert a second set of network parameters to a number format selected based on the collected one or more statistics, the second set of network parameters comprising (i) the first set of network parameters and/or another set of network parameters for the layer, or (ii) a set of network parameters for a subsequent pass of the neural network corresponding to the first set of network parameters.

3. The neural network accelerator (300) of claim 2, wherein the neural network accelerator (300) is configured to perform a pass of the neural network in a plurality of hardware passes of the neural network accelerator (300), wherein for each hardware pass the neural network accelerator (300) receives a set of input data corresponding to all or a portion of the input data to a layer of the neural network and processes that set of input data in accordance with at least the layer of the neural network for the pass of the neural network.

4. The neural network accelerator (300) of claim 2 or claim 3, wherein the first set of network parameters comprises all network parameters of a same type for the layer, and the second set of network parameters comprises a set of network parameters for a subsequent pass of the neural network that correspond to the first set of network parameters.

5. The neural network accelerator (300) of claim 3, wherein the first set of network parameters comprises all of the network parameters of a particular type for a layer that are in a hardware pass of the neural network accelerator (300) for the pass of the neural network.

6. The neural network accelerator (300) of claim 5, wherein:

   (i) the second set of network parameters comprises all of the network parameters of the particular type for the layer that are in another hardware pass of the neural network accelerator (300) for the pass of the neural network and/or the first set of network parameters; or
   (ii) the second set of network parameters comprises the network parameters in a hardware pass of the neural network accelerator (300) for a subsequent pass of the neural network that correspond to the first set of network parameters.

7. The neural network accelerator (300) of claim 3, wherein the first set of network parameters comprises a subset of the network parameters of a particular type for the layer that are in a hardware pass of the neural network accelerator (300) for the pass of the neural network.

8. The neural network accelerator (300) of claim 7, wherein:

(i) the second set of network parameters comprises another subset of the network parameters of the particular type for the layer that are in the hardware pass of the neural network accelerator (300) for the pass of the neural network and/or the first set of network parameters; or
(ii) the second set of network parameters comprises the network parameters in a hardware pass of the neural network accelerator (300) for a subsequent pass of the neural network that correspond to the first set of network parameters.

9. The neural network accelerator (300) of any of claims 2 to 8, wherein:

the format conversion hardware unit (326, 328, 330, 332) is configured to convert the first set of network parameters to a configurable number format prior to the first set of network parameters being processed by one or more of the at least one network processing hardware unit; and
the statistics collection hardware unit (318, 320, 322, 324) is configured to collect the statistics on the first set of network parameters prior to the format conversion performed by the format conversion hardware unit (326, 328, 330, 332).

10. The neural network accelerator (300) of any of claims 2 to 8, wherein:

the format conversion hardware unit (326, 328, 330, 332) is configured to convert the first set of network parameters to a configurable number format prior to the first set of network parameters being processed by one or more of the at least one network processing hardware unit;
the statistics collection hardware unit (318, 320, 322, 324) is configured to collect the statistics on the first set of network parameters after the format conversion performed by the format conversion hardware unit (326, 328, 330, 332); and
the second set of network parameters comprises (i) another set of network parameters for the layer for the pass of the neural network, or (ii) a set of network parameters for a subsequent pass of the neural network corresponding to the first set of network parameters.

11. The neural network accelerator (300) of any of claims 2 to 10, further comprising:

another statistics collection hardware unit (318, 320, 322, 324) configured to collect one or more statistics on a third set of network parameters for another layer of the neural network while the neural network accelerator is performing the pass of the neural network; and
another format conversion hardware unit (326, 328, 330, 332) configured to convert a fourth set of network parameters to a number format selected based on the one or more statistics collected by the other statistics collection hardware unit, the fourth set of network parameters comprising (i) the third set of network parameters and/or another set of network parameters for the other layer, or (ii) a set of network parameters for a subsequent pass of the neural network corresponding to the third set of network parameters.

12. The neural network accelerator (300) of any of claims 2 to 11, wherein the pass of the neural network and the subsequent pass of the neural network are forward passes of the neural network; or
wherein the pass of the neural network and the subsequent pass of the network are backward passes of the neural network.

13. The neural network accelerator (300) of any of claims 2 to 12, further comprising a format selection hardware unit that is configured to select the number format based on the collected one or more statistics in accordance with a format select algorithm.

14. A computer system comprising:

the neural network accelerator (300) of any of claims 2 to 12; and
an external unit coupled to the neural network accelerator, the external unit configured to select the number format based on the collected one or more statistics in accordance with a format selection algorithm.

15. A computer readable storage medium having stored thereon a computer readable description of the neural network accelerator (300) as set forth in any of claims 1 to 13 that, when processed in an integrated circuit manufacturing system, causes the integrated circuit manufacturing system to manufacture an integrated circuit embodying the neural network accelerator (300).

100

INPUT DATA — 108

LAYER 1 — 102

110

LAYER 2 — 104

112

LAYER 3 — 106

OUTPUT DATA — 114

**FIG. 1**

FIG. 2

**FIG. 3**

**FIG. 4**

FIG. 5

FIG. 6

FIG. 7

FIG. 8

**FIG. 9**

$x_1$ $k_1$   $x_2$ $k_2$   $x_3$ $k_3$   $x_4$ $k_4$   $x_5$ $k_5$   $x_6$ $k_6$   $x_7$ $k_7$   $x_8$ $k_8$

902

| X 1002 | X 1002 | X 1002 | X 1002 | X 1002 | X 1002 | X 1002 | X 1002 |

+ 1004    + 1004    + 1004    + 1004

+ 1004    + 1004

+ 1004

ADDER TREE

**FIG. 10**

EP 4 345 692 A1

1100

1102

COLLECT ONE OR MORE STATISTICS ON FIRST SET
OF NETWORK PARAMETERS FOR LAYER OF
NEURAL NETWORK WHILE NNA PERFORMS A PASS
OF THE NEURAL NETWORK

1104

SELECT NUMBER FORMAT BASED ON ONE OR
MORE STATISTICS

1106

CONVERT SECOND SET OF NETWORK PARAMETERS
FOR LAYER OF NEURAL NETWORK TO SELECTED
NUMBER FORMAT WHILE NNA PERFORMS A PASS
OR SUBSEQUENT PASS OF THE NEURAL NETWORK

1108

PROCESS CONVERTED SET OF NETWORK
PARAMETERS IN ACCORDANCE WITH NEURAL
NETWORK TO PERFORM THE PASS OR THE
SUBSEQUENT PASS

1110

REPEAT?    YES

NO    1112

END

FIG. 11

FIG. 12

FIG. 13

**FIG. 14**

1504   1502   1506

CIRCUIT
LAYOUT
IC DEFINITION  LAYOUT  DEFINITION  INTEGRATED  INTEGRATED
DATASET  PROCESSING   CIRCUIT   CIRCUIT
            GENERATION

**FIG. 15**

Europäisches
Patentamt

European
Patent Office

Office européen
des brevets

# EUROPEAN SEARCH REPORT

Application Number

EP 23 20 0824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/210840 A1 (DARVISH ROUHANI BITA [US] ET AL) 2 July 2020 (2020-07-02) * abstract; figures 1, 6, 7 * * paragraph [0091] – paragraph [0116] * * paragraph [0044] – paragraph [0060] * ----- | 1-15 | INV. G06N3/063 G06N3/0464 G06N3/0495 |
| A | US 2022/044096 A1 (ASAD MUHAMMAD [GB] ET AL) 10 February 2022 (2022-02-10) * abstract; figures 3, 11 * * paragraph [0135] – paragraph [0200] * ----- | 13 | |

TECHNICAL FIELDS
SEARCHED       (IPC)

G06N

The present search report has been drawn up for all claims

| Place of search | Date of completion of the search | Examiner |
|---|---|---|
| The Hague | 13 February 2024 | Rousset, Antoine |

EPO FORM 1503 03.82 (P04C01)

## ANNEX TO THE EUROPEAN SEARCH REPORT
## ON EUROPEAN PATENT APPLICATION NO.

EP 23 20 0824

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2024

| Patent document cited in search report | Publication date | Patent family member(s) | | Publication date |
|---|---|---|---|---|
| US 2020210840 A1 | 02-07-2020 | EP | 3888012 A1 | 06-10-2021 |
| | | US | 2020210840 A1 | 02-07-2020 |
| | | WO | 2020142193 A1 | 09-07-2020 |
| US 2022044096 A1 | 10-02-2022 | CN | 113887710 A | 04-01-2022 |
| | | EP | 3933706 A1 | 05-01-2022 |
| | | GB | 2596606 A | 05-01-2022 |
| | | US | 2022044096 A1 | 10-02-2022 |

EPO FORM P0459

For more details about this annex : see Official Journal of the European Patent Office, No. 12/82

**REFERENCES CITED IN THE DESCRIPTION**

**Patent documents cited in the description**

- GB 2209584 A
- GB 1718293 A
- GB 2552242 A